# EUROPEAN PATENT APPLICATION

(11) **EP 4 011 255 A1**
(43) Date of publication of application: **15.06.2022**
(21) Application number: 20849834.5
(22) Date of filing: 27.07.2020
(51) Int. Cl.: A47J 43/04, B25J 13/08, G06Q 50/12

(54) **INFORMATION PROCESSING DEVICE, INFORMATION PROCESSING METHOD, COOKING ROBOT, COOKING METHOD, AND COOKING INSTRUMENT**

(30) Priority: 08.08.2019 JP 2019145959
(71) Applicant: Sony Group Corporation, Tokyo 108-0075 (JP)
(72) Inventor: FUJITA, Masahiro, Tokyo 108-0075 (JP); SPRANGER, Michael Siegfried, Tokyo 108-0075 (JP); NASHIDA, Tatsushi, Tokyo 108-0075 (JP)
(74) Representative: D Young & Co LLP
(86) International application number: PCT/JP2020/028639
(87) International publication number: WO 2021/024830

(57) **Abstract**

The present technology relates to an information processing device, an information processing method, a cooking robot, a cooking method, and cooking equipment that make it possible to generate new arrangements of dishes. An information processing device according to an aspect of the present technology generates new arrangement information which is information on a new arrangement on the basis of arrangement information including food ingredient information which is information on food ingredients used for an arrangement of a dish, arrangement action information which is information on an arrangement action by a cooking person, and cooking tool information which is information on cooking tools used for the arrangement. The present technology can be applied to a computer prepared in a kitchen.

## Description

### [Technical Field]

The present technology particularly relates to an information processing device, an information processing method, a cooking robot, a cooking method, and cooking equipment that make it possible to generate new arrangements of dishes.

### [Background Art]

In recent years, there has been an increasing demand for arrangements of dishes in consideration of appearance in services in which videos of cooking steps are shared and services in which photos of arranged dishes are shared, and the like.

In dishes, arrangement can be described as a method of expressing taste, appearance, stories, and the like. For example, chefs of restaurants are required to create new arrangements of dishes at all times.

### [Citation List]

### [Patent Literature]

[PTL 1]
   Japanese Translation of PCT Application No. 2017-506169
[PTL 2]
   Japanese Translation of PCT Application No. 2017-536247

### [Summary]

### [Technical Problem]

It is not easy to continuously create new arrangements of dishes due to the working of fixed ideas based on common sense, culture, and the like in the world of cooking or fixed ideas based on experience.

The present technology has been made in view of such circumstances and makes it possible to generate new arrangements of dishes.

### [Solution to Problem]

An information processing device according to a first aspect of the present technology includes an arrangement generation unit configured to generate new arrangement information which is information on a new arrangement on the basis of arrangement information including food ingredient information which is information on food ingredients used for an arrangement of a dish, arrangement action information which is information on an arrangement action by a cooking person, and cooking tool information which is information on cooking tools used for the arrangement.

A cooking robot according to a second aspect and cooking equipment according to a third aspect of the present technology include a control unit configured to perform an action of a new arrangement on the basis of new arrangement information which is information on the new arrangement, which is generated on the basis of arrangement information including food ingredient information which is information on food ingredients used for an arrangement of a dish, arrangement action information which is information on an arrangement action by a cooking person, and cooking tool information which is information on cooking tools used for the arrangement.

### [Brief Description of Drawings]

[Fig. 1]

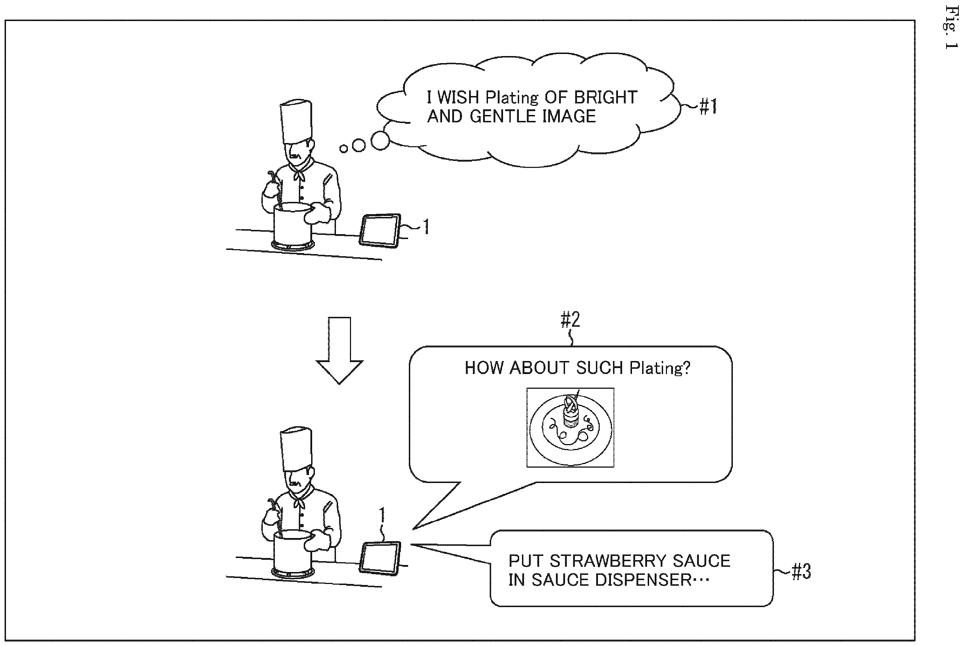

   Fig. 1 is a diagram illustrating an example of presentation of a Plating by an information processing device according to an embodiment of the present technology.
[Fig. 2]

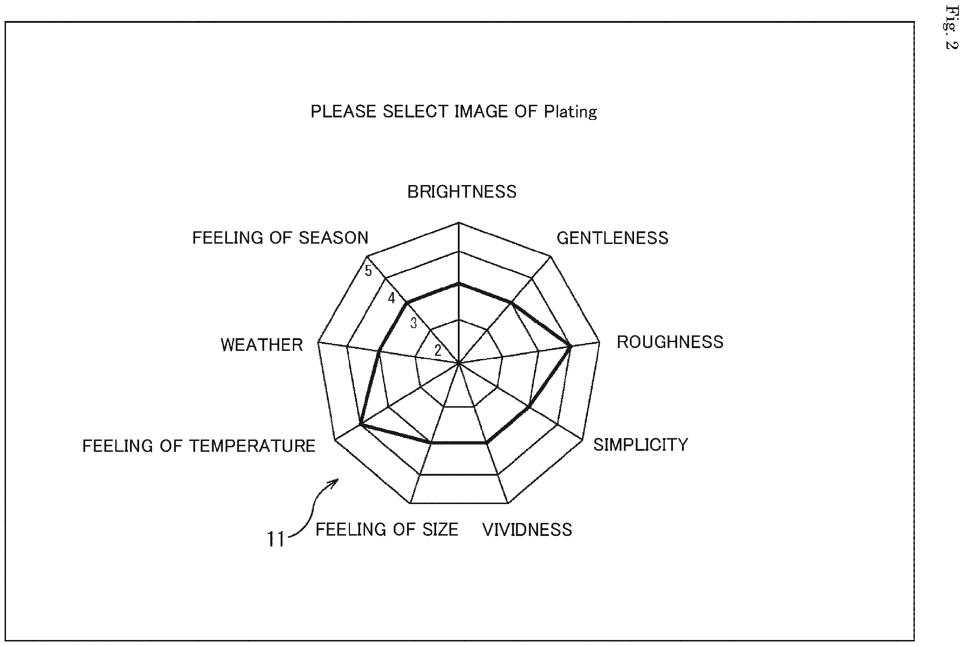

   Fig. 2 is a diagram illustrating an example of a screen used to designate a Plating subjective evaluation.
[Fig. 3]

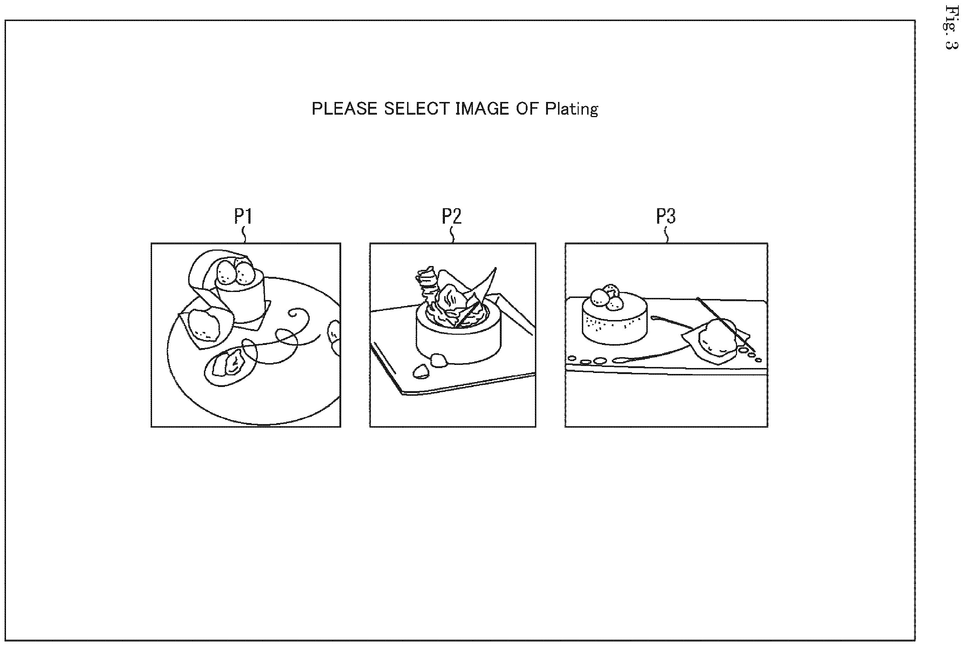

   Fig. 3 is a diagram illustrating an example of a screen used to designate a Plating image picture.
[Fig. 4]

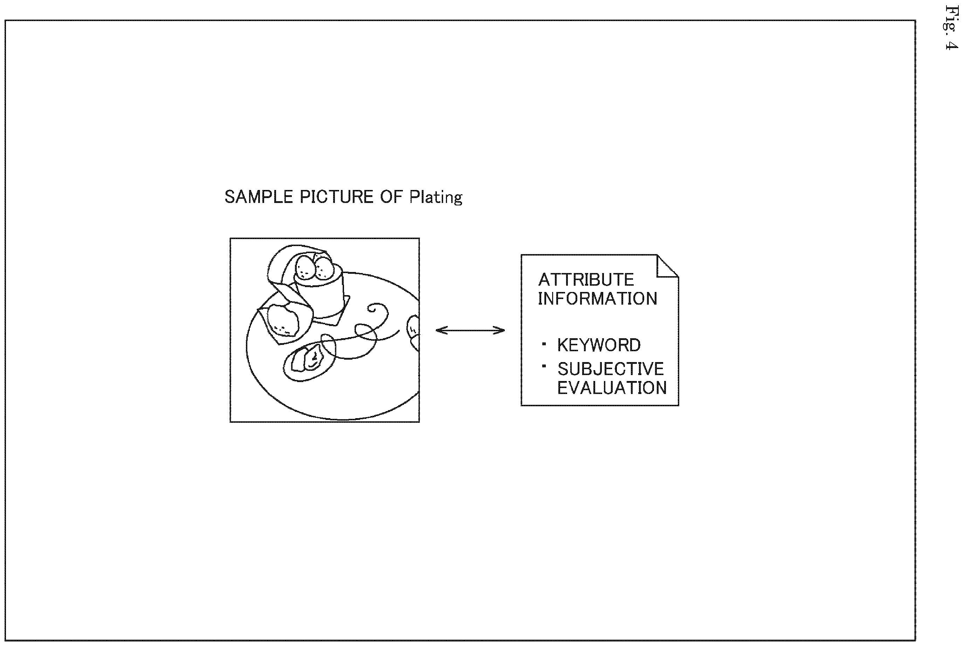

   Fig. 4 is a diagram illustrating an example of a sample picture.
[Fig. 5]

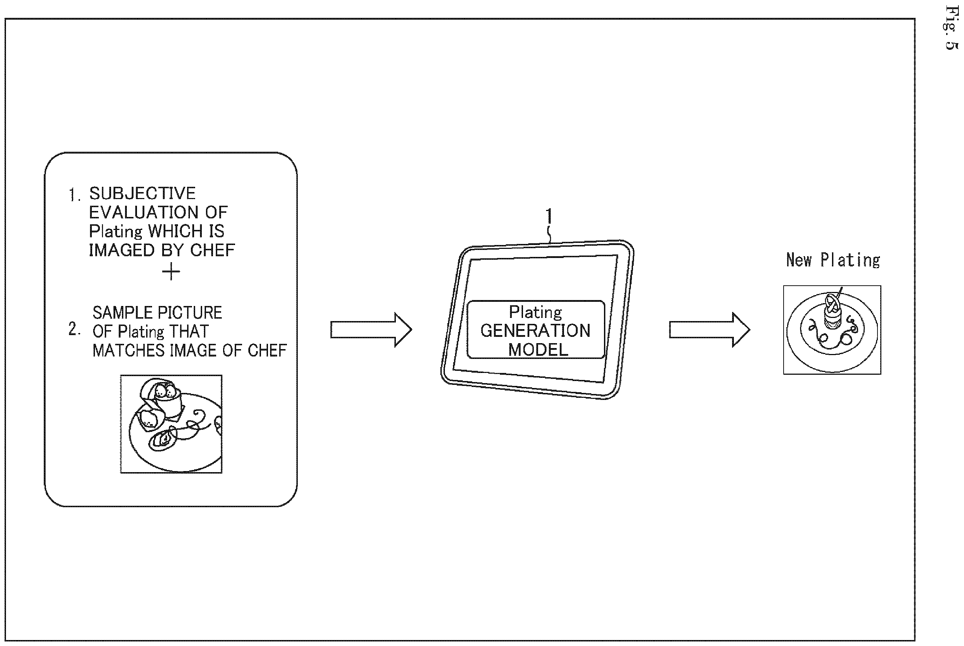

   Fig. 5 is a diagram illustrating an example of input and output for the information processing device.
[Fig. 6]

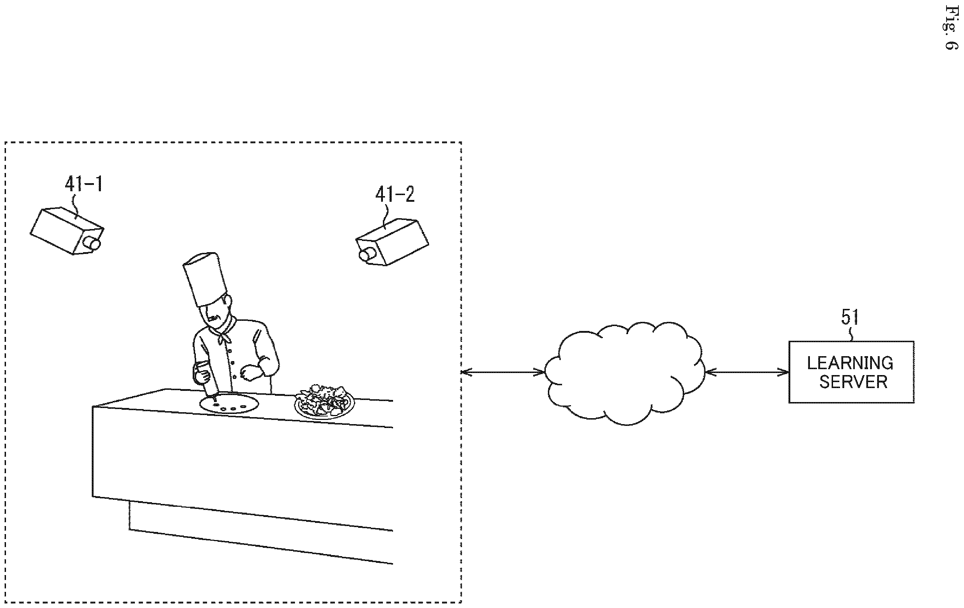

   Fig. 6 is a diagram illustrating the state of collecting of learning data.
[Fig. 7]

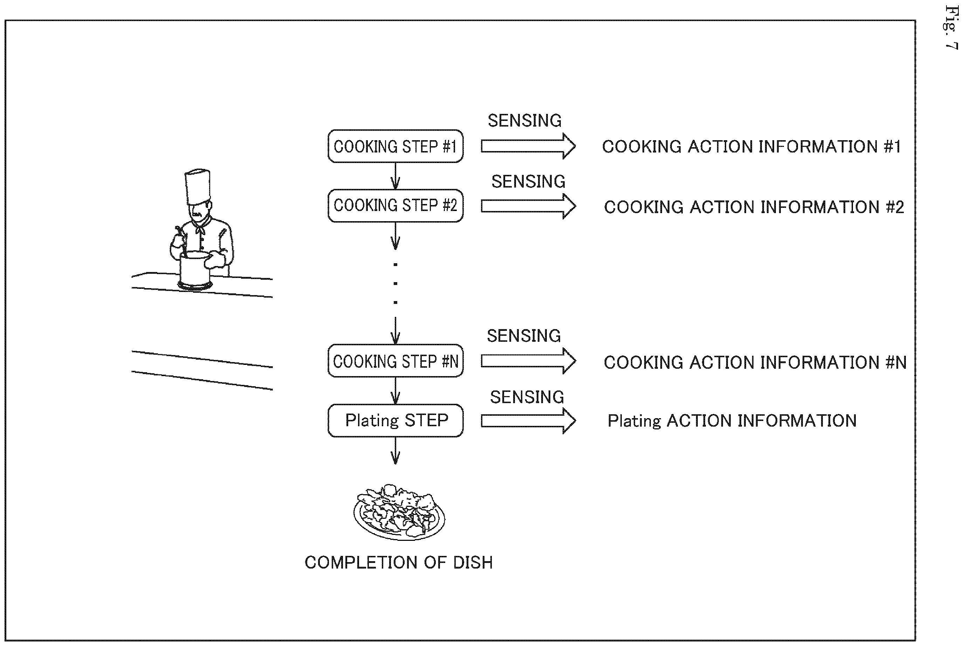

   Fig. 7 is a diagram illustrating an example of a flow of generation of cooking action information and Plating action information.
[Fig. 8]

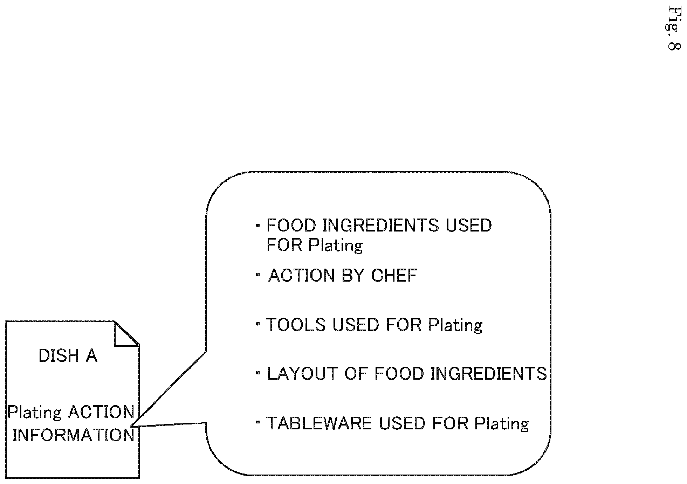

   Fig. 8 is a diagram illustrating an example of information constituting Plating action information.
[Fig. 9]

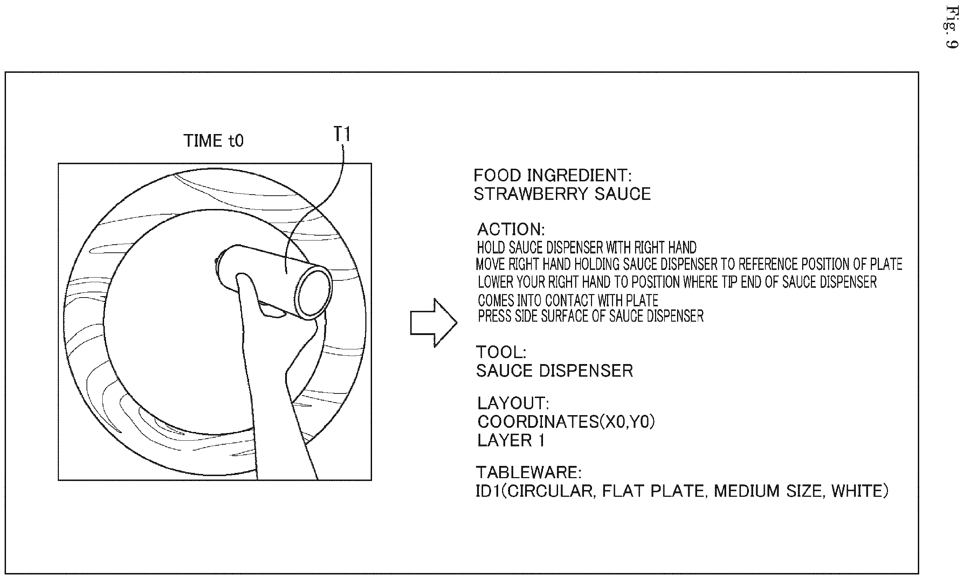

   Fig. 9 is a diagram illustrating a specific example of a Plating action.
[Fig. 10]

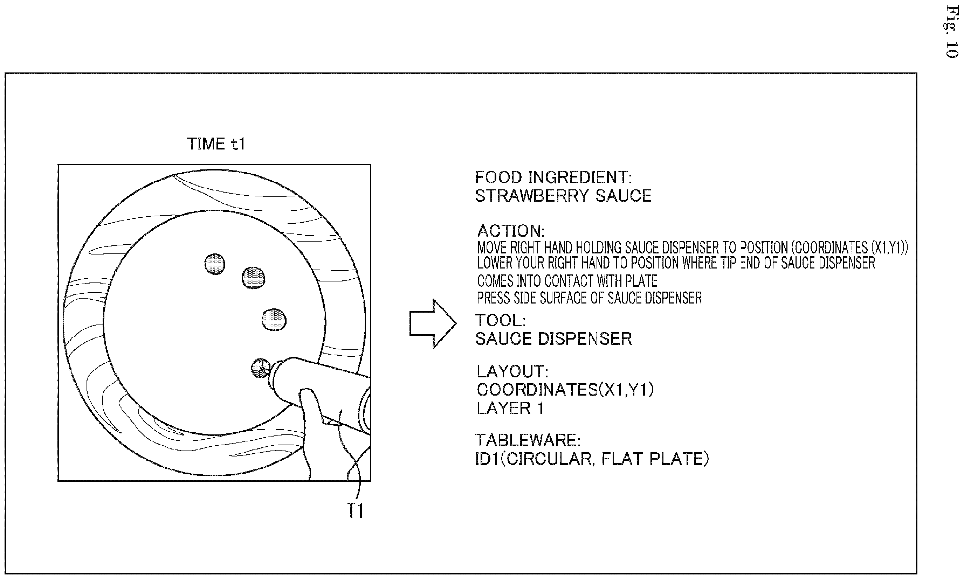

   Fig. 10 is a diagram illustrating a specific example of a Plating action subsequent to Fig. 9.
[Fig. 11]

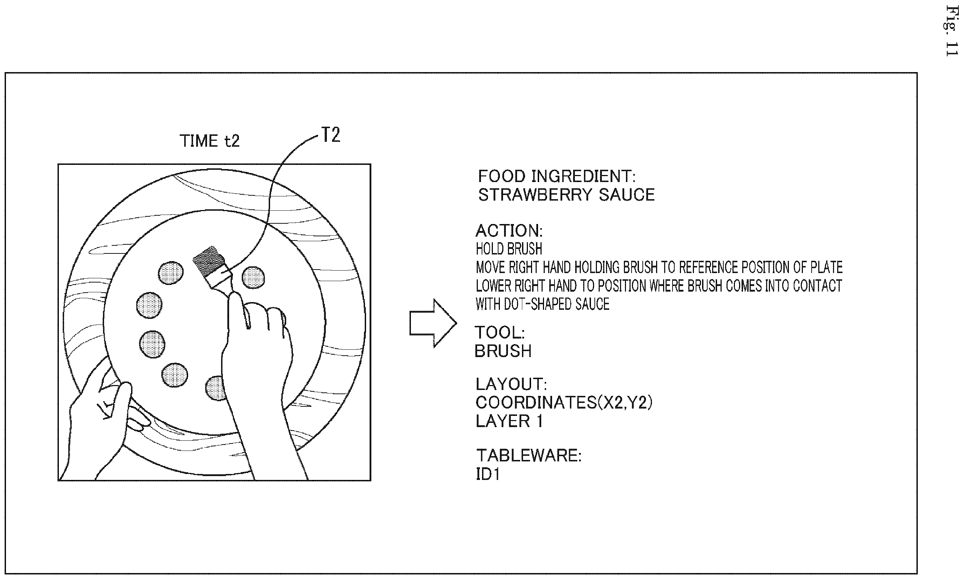

   Fig. 11 is a diagram illustrating a specific example of a Plating action subsequent to Fig. 10.
[Fig. 12]

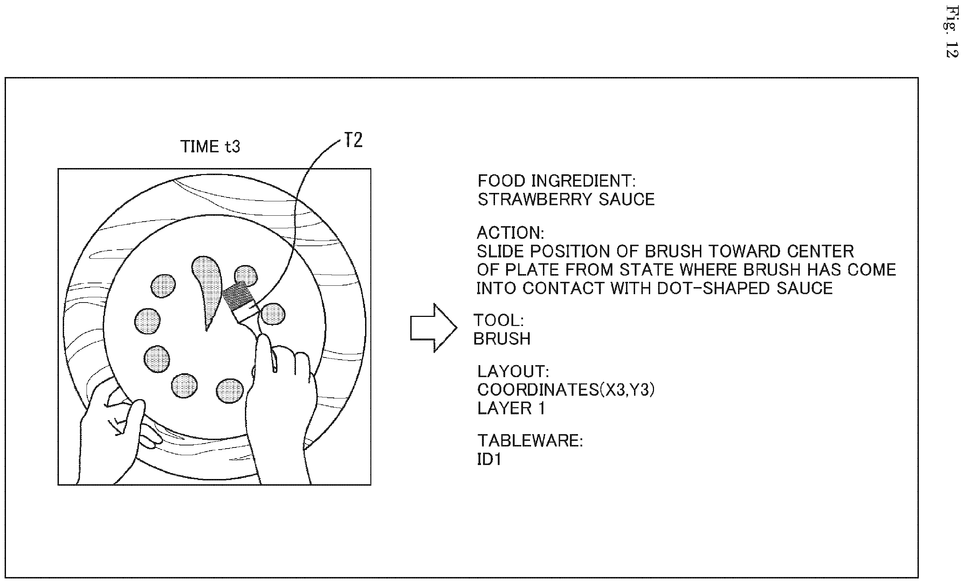

   Fig. 12 is a diagram illustrating a specific example of a Plating action subsequent to Fig. 11.
[Fig. 13]

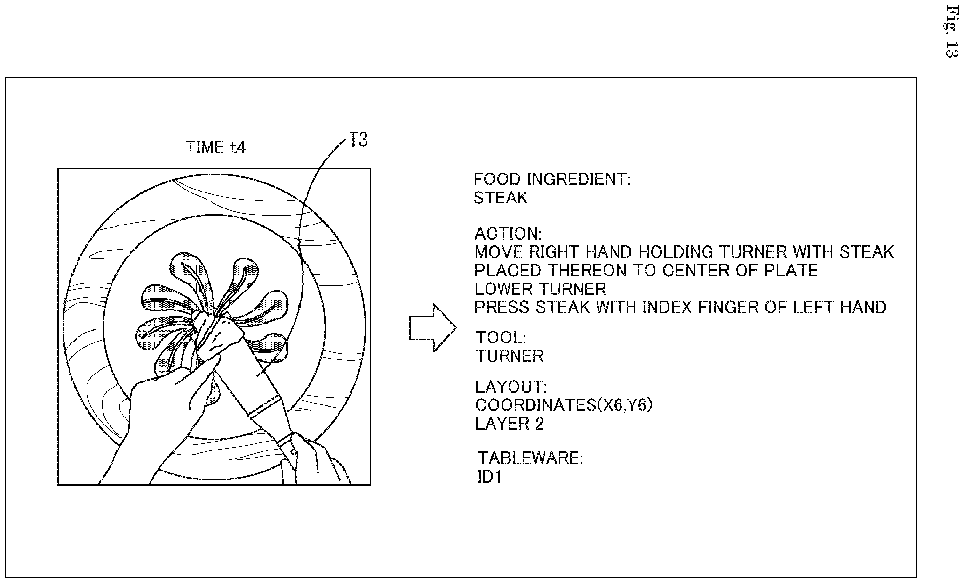

   Fig. 13 is a diagram illustrating a specific example of a Plating action subsequent to Fig. 12.
[Fig. 14]

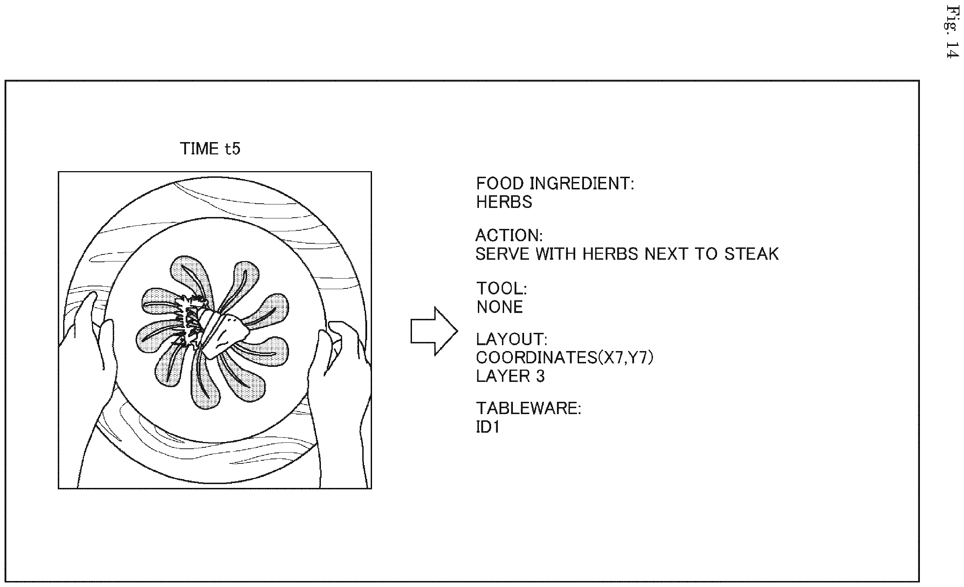

   Fig. 14 is a diagram illustrating a specific example of a Plating action subsequent to Fig. 13.
[Fig. 15]

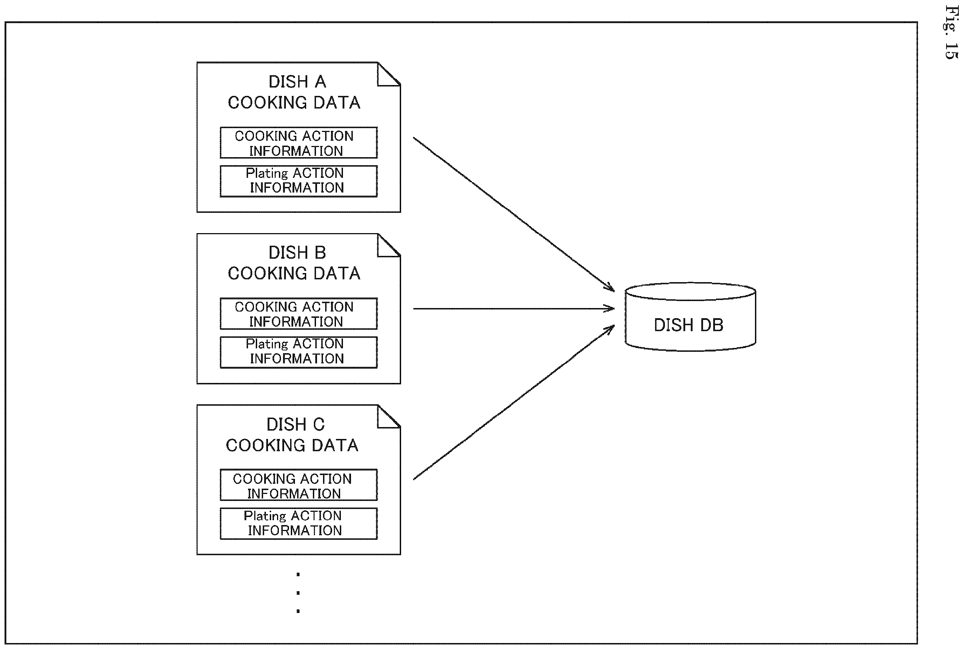

   Fig. 15 is a diagram illustrating an example of a dish DB.
[Fig. 16]

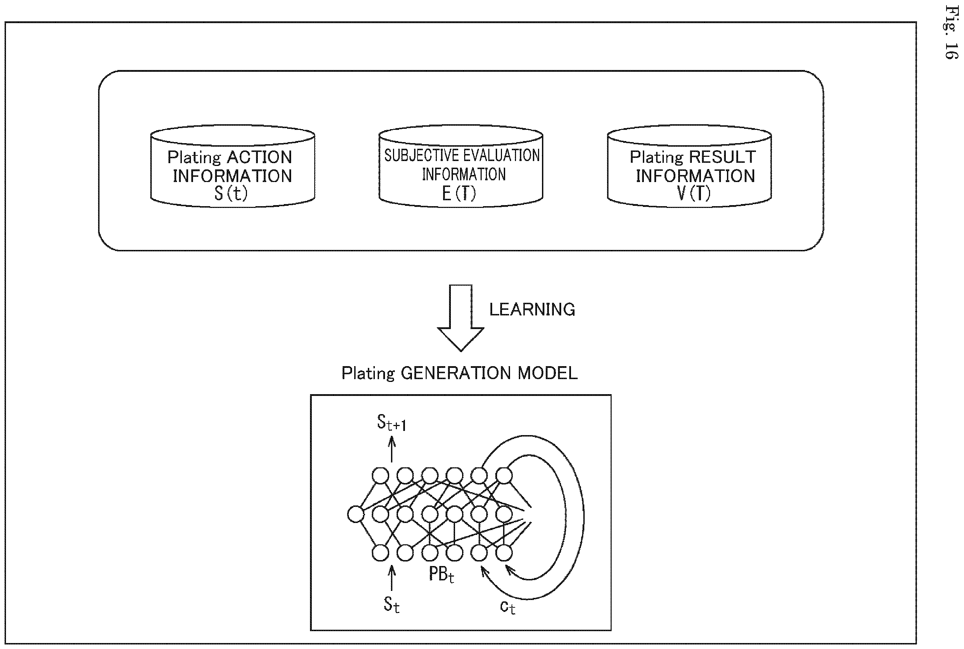

   Fig. 16 is a diagram illustrating an example of information used to learn a Plating generation model.
[Fig. 17]

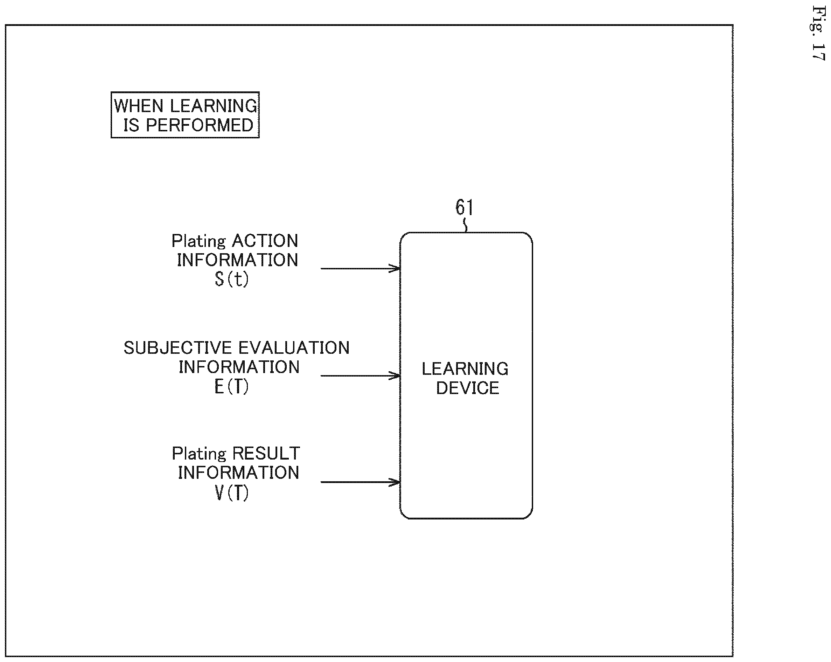

   Fig. 17 is a diagram illustrating an example of learning.
[Fig. 18]

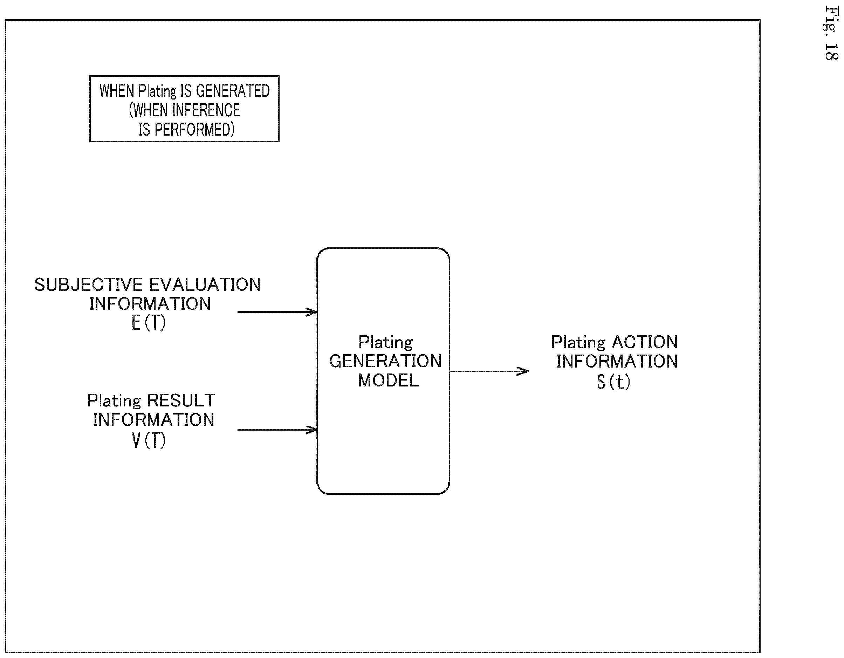

   Fig. 18 is a diagram illustrating the state of a Plating generation model during inference.
[Fig. 19]

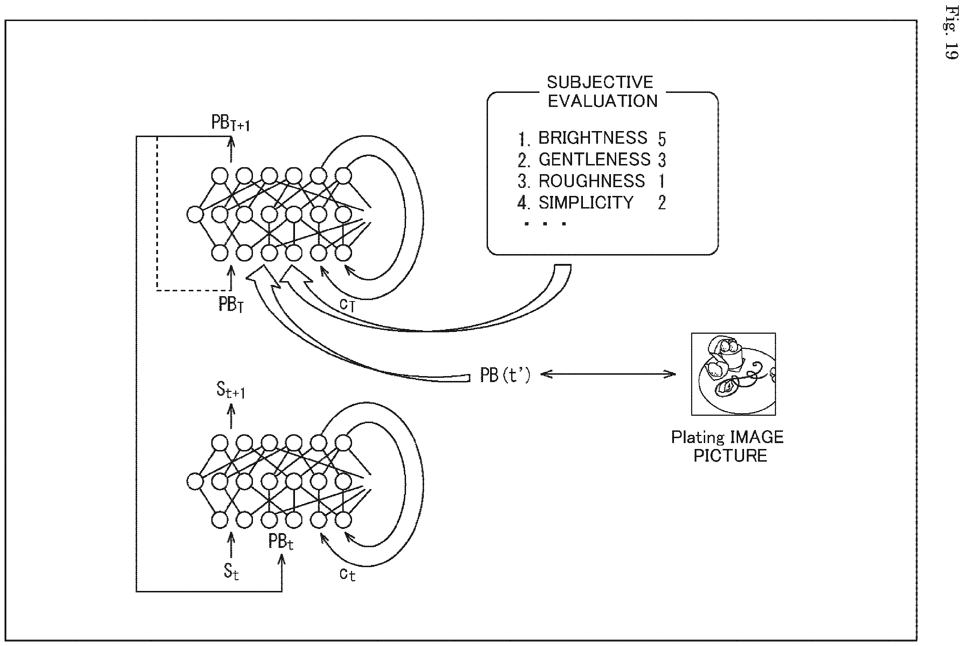

   Fig. 19 is a diagram illustrating an example of prediction using RNNPB.
[Fig. 20]

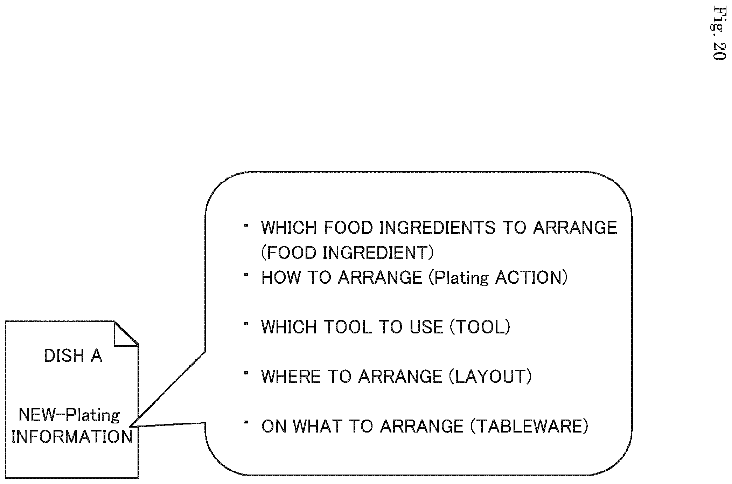

   Fig. 20 is a diagram illustrating an example of Plating action information S(t) which is output by the Plating generation model.
[Fig. 21]

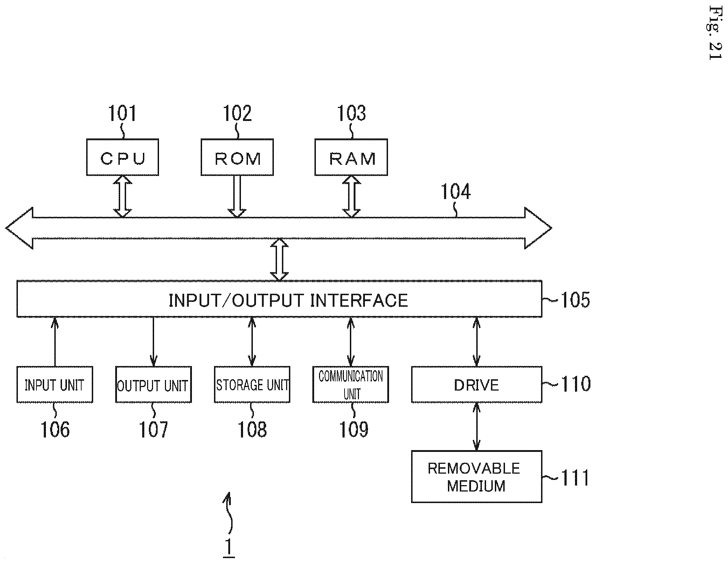

   Fig. 21 is a block diagram illustrating a configuration example of hardware of the information processing device.
[Fig. 22]

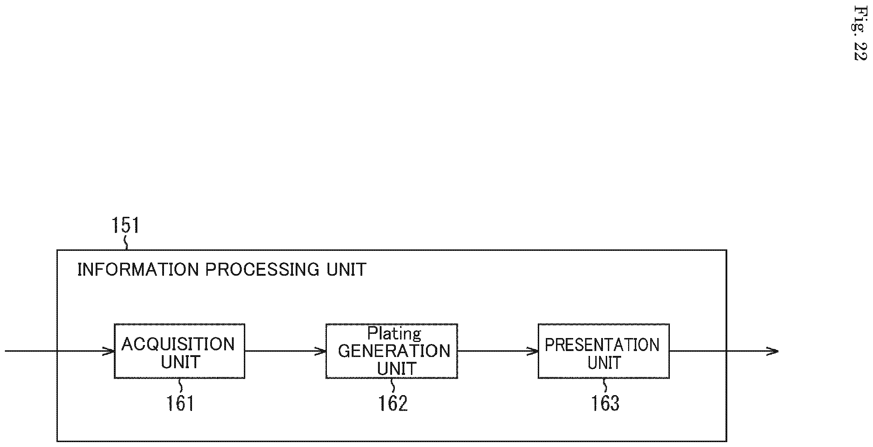

   Fig. 22 is a block diagram illustrating a functional configuration example of the information processing device.
[Fig. 23]

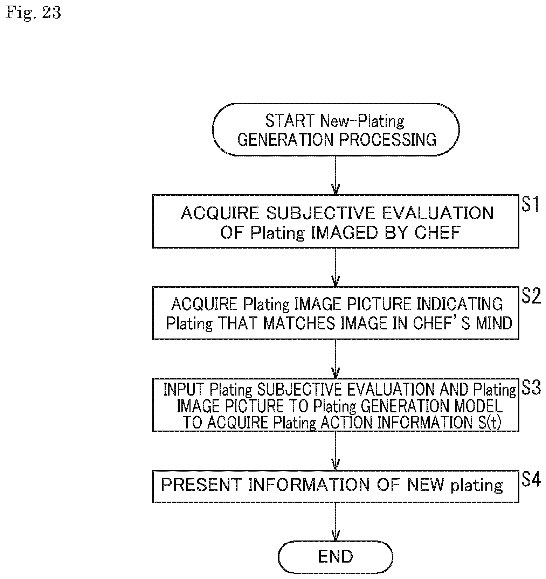

   Fig. 23 is a flowchart illustrating processing of the information processing device.
[Fig. 24]

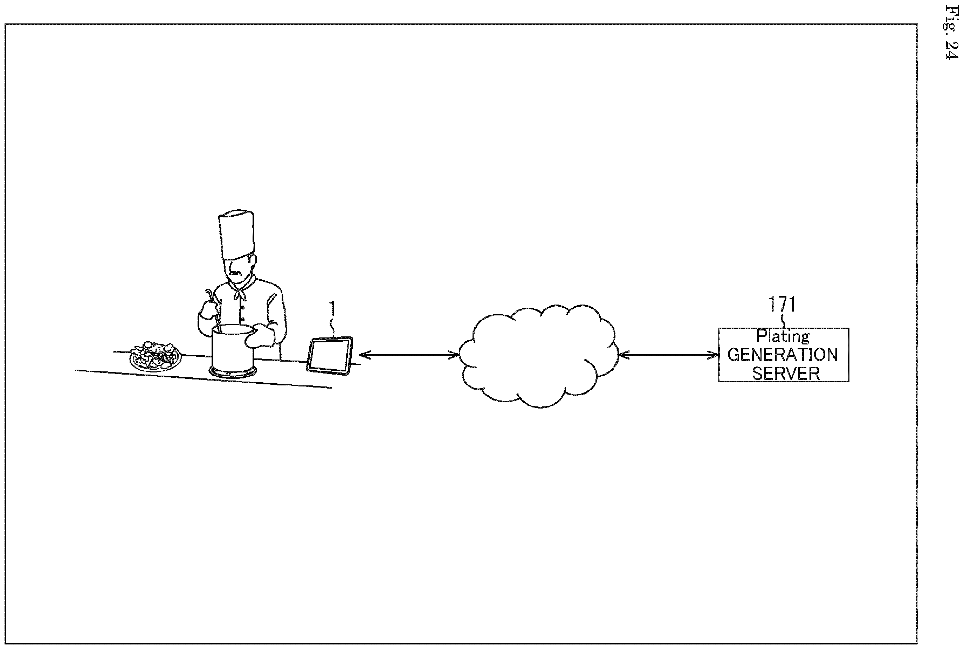

   Fig. 24 is a diagram illustrating a configuration example of a network system.
[Fig. 25]

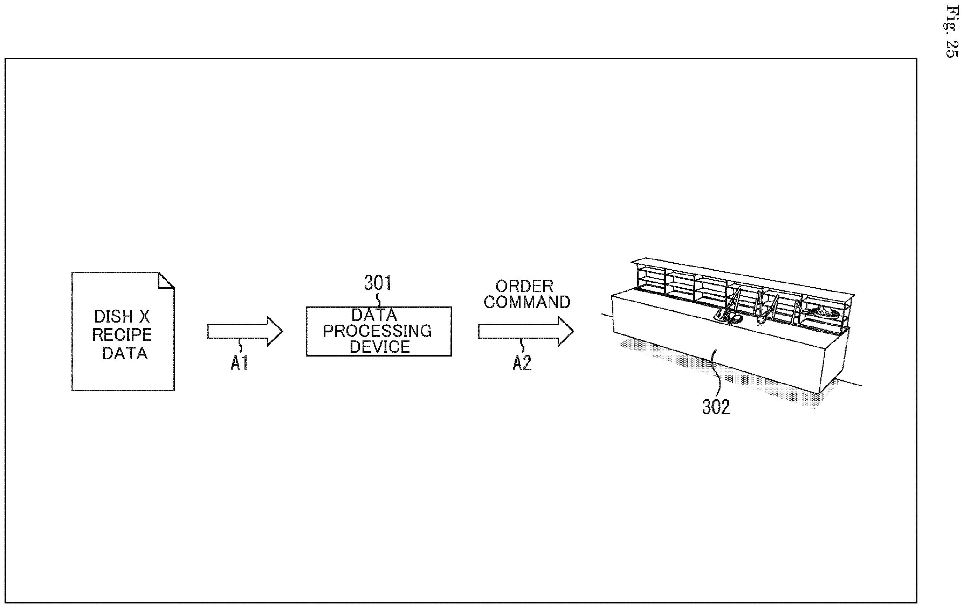

   Fig. 25 is a diagram illustrating a configuration example of a control system.
[Fig. 26]

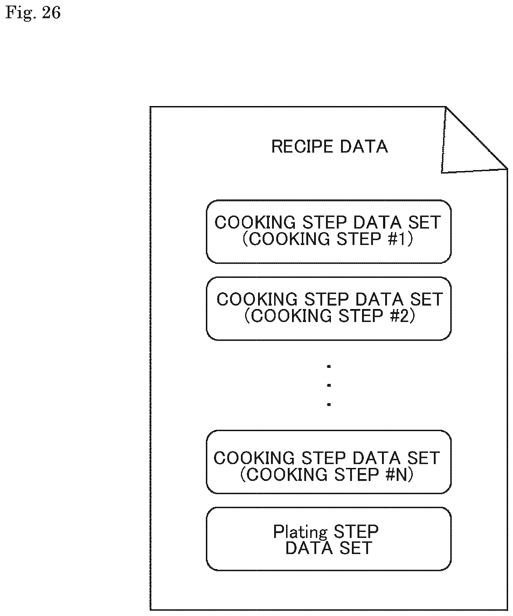

   Fig. 26 is a diagram illustrating an example of description content of recipe data.
[Fig. 27]

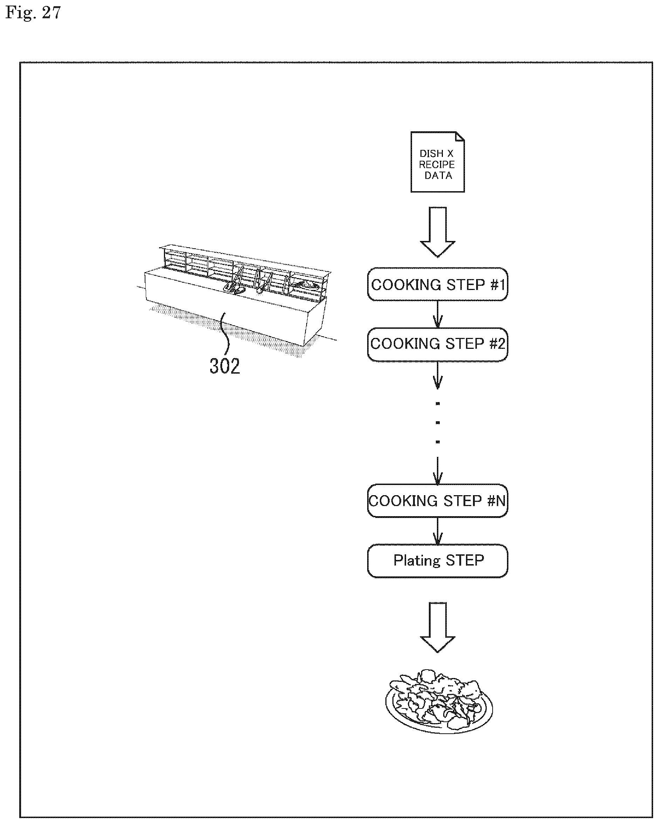

   Fig. 27 is a diagram illustrating an example of a flow of reproduction of a dish based on recipe data.
[Fig. 28]

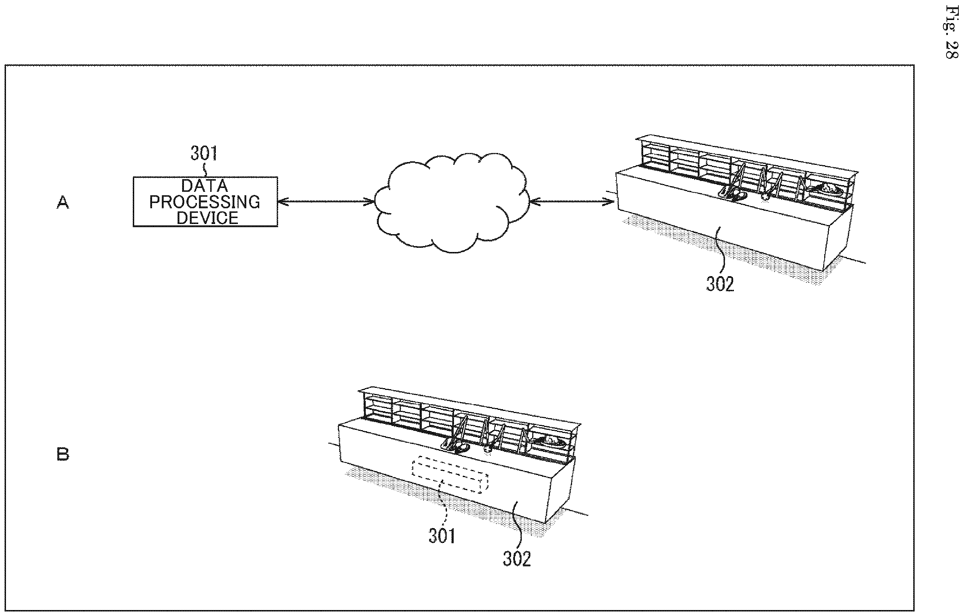

   Fig. 28 is a diagram illustrating an example of a layout of a data processing device.
[Fig. 29]

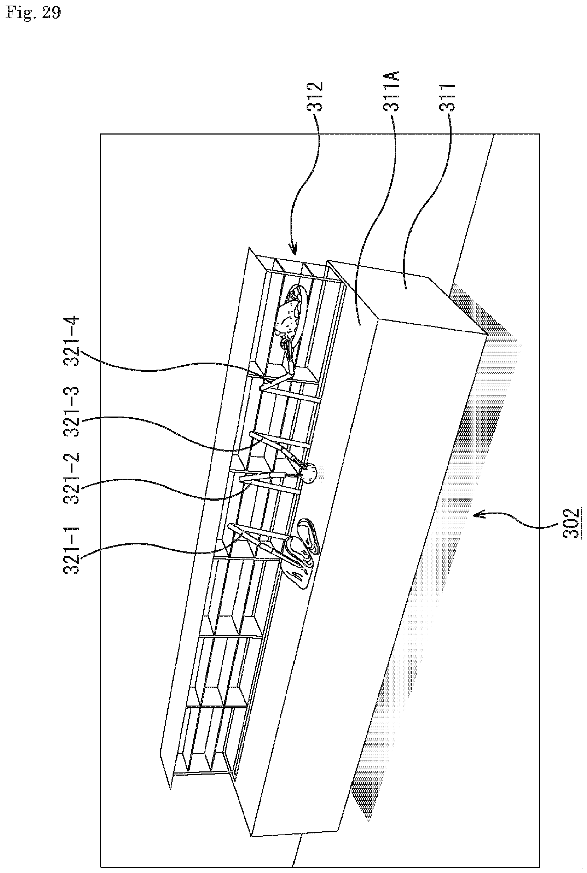

   Fig. 29 is a perspective view illustrating the appearance of a cooking robot.
[Fig. 30]

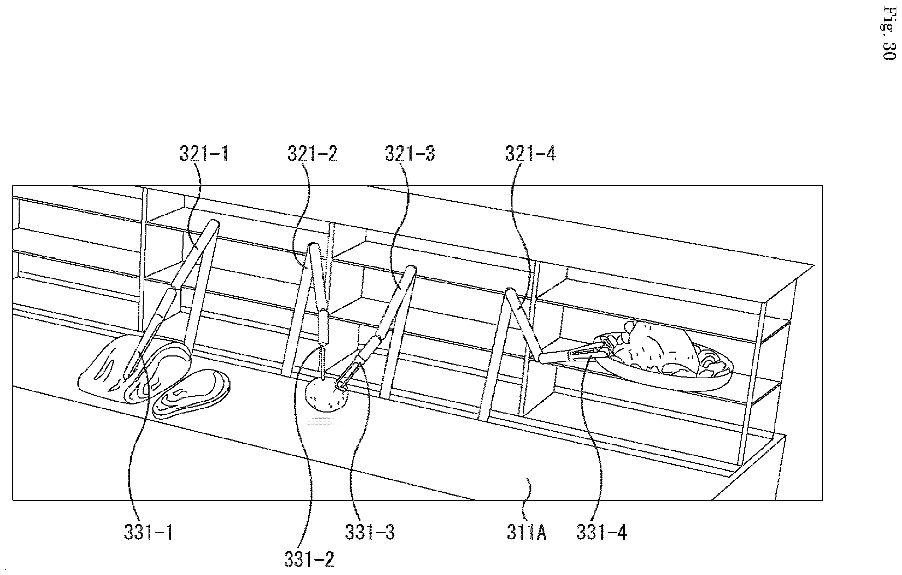

   Fig. 30 is an enlarged view of the state of cooking arms.
[Fig. 31]

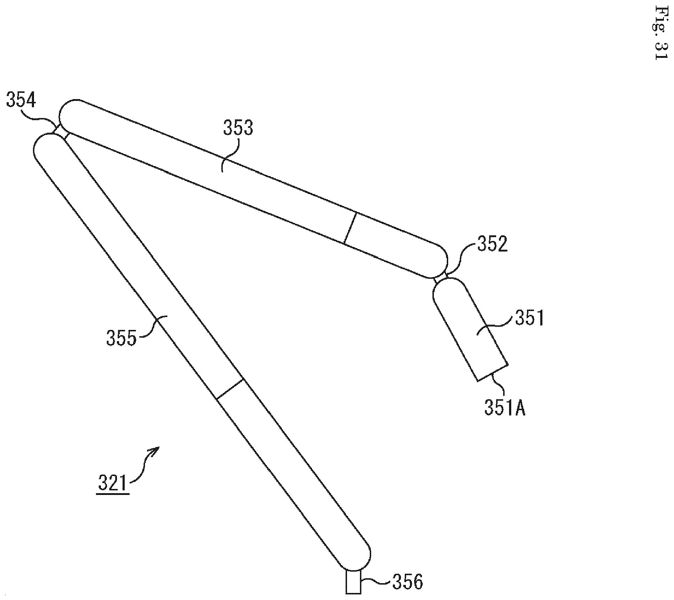

   Fig. 31 is a diagram illustrating the appearance of a cooking arm.
[Fig. 32]

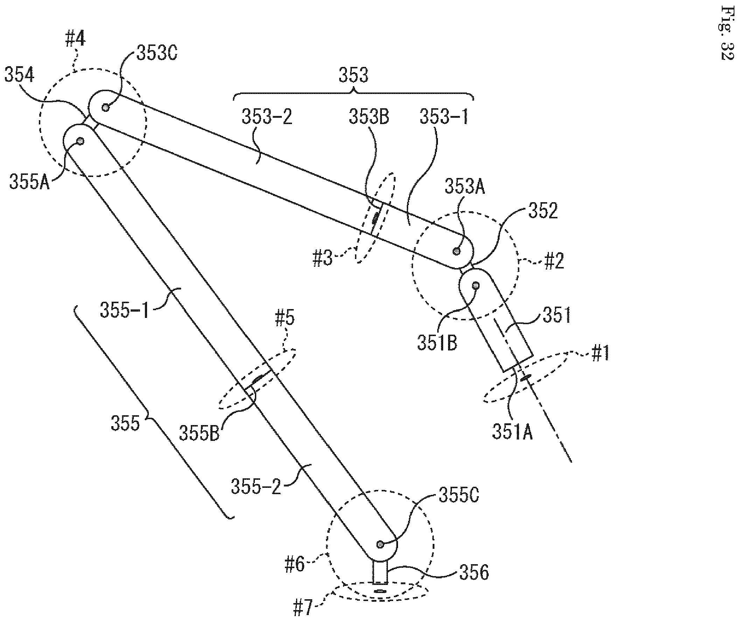

   Fig. 32 is a diagram illustrating an example of a movable region of each portion of a cooking arm.
[Fig. 33]

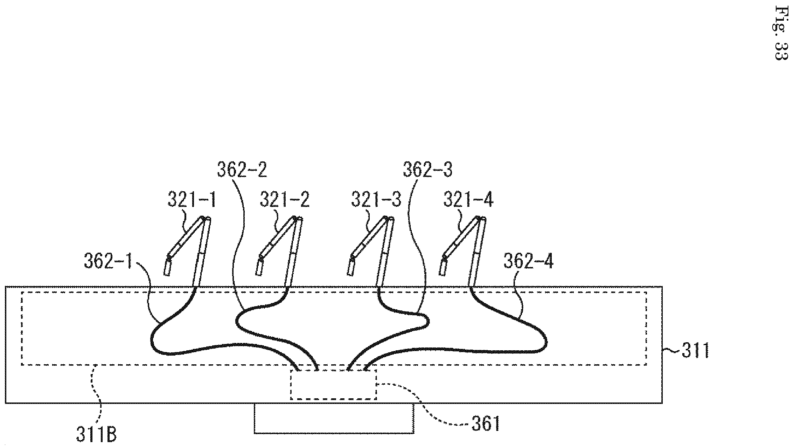

   Fig. 33 is a diagram illustrating an example of connection between a cooking arm and a controller.
[Fig. 34]

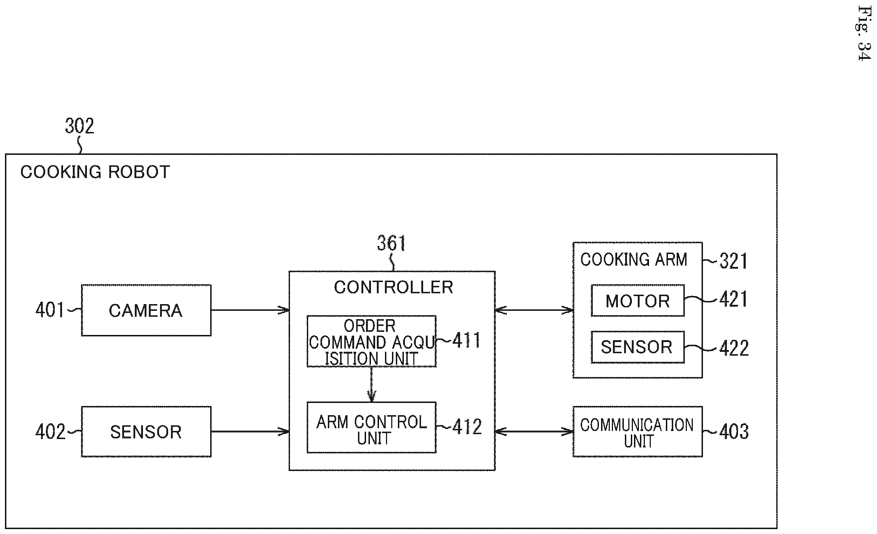

   Fig. 34 is a block diagram illustrating a configuration example of a cooking robot.
[Fig. 35]

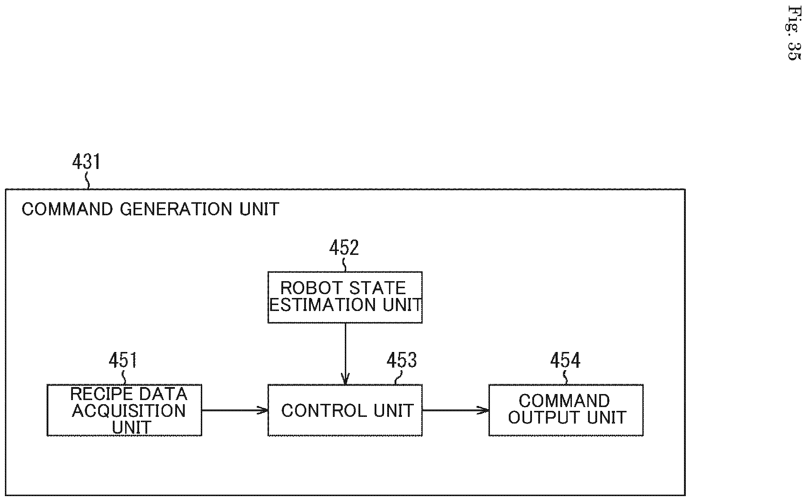

   Fig. 35 is a block diagram illustrating a functional configuration example of the data processing device.
[Fig. 36]

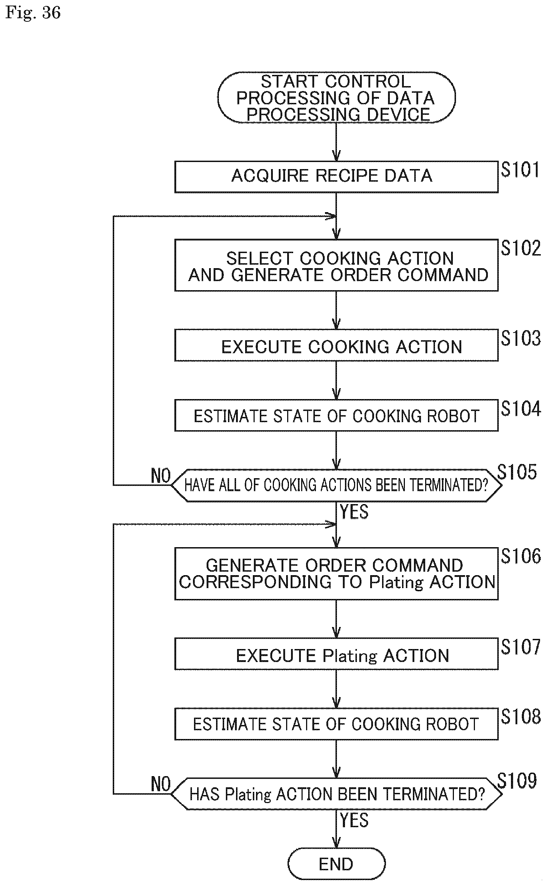

   Fig. 36 is a flowchart illustrating processing of the data processing device.
[Fig. 37]

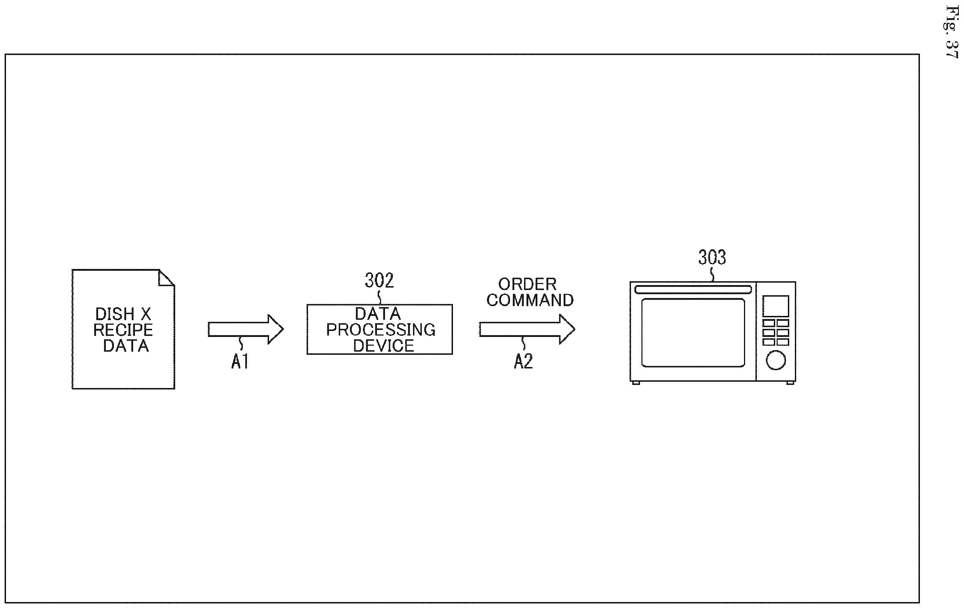

   Fig. 37 is a diagram illustrating another configuration example of a control system.

### [Description of Embodiments]

### <Outline of the Present Technology>

The present technology generates a new Plating of dishes and presents the generated new Plating to a cooking person called a chef, a chief cook, a cook, or the like.

A Plating (Food Plating) is an arrangement of a dish. Cooking is completed by arranging cooked food ingredients and the like. Here, a new Plating is a Plating different from a Plating prepared on the side of generation of a Plating. For the Plating prepared on the side of generation, a Plating having at least one different element among elements constituting an arrangement of a dish, such as a Plating with a different food ingredient used for an arrangement, a Plating with a different arrangement position, a Plating with a different color, a Plating with different tableware used for an arrangement, and a Plating with a different order of arrangement are included as new Platings.

Food ingredients used for an arrangement include not only food ingredients such as meat and fish that have been cooked by being roasted or applying heat, but also vegetables cut with a kitchen knife and food ingredients such as herbs and tomatoes. Seasonings such as salt and pepper, and liquids such as sauces made by mixing a plurality of seasonings are also included in food ingredients used for an arrangement.

That is, food ingredients used for an arrangement include all the elements constituting a final dish.

Note that a dish is a result completed through cooking. Cooking is a process of making a dish or an act (work) of making a dish.

In addition, the present technology generates a new Plating of a dish and reproduces the Plating in a cooking robot. The cooking robot completes a dish by performing cooking according to described recipe data prepared for each dish and serving food ingredients produced by the cooking.

Hereinafter, an embodiment for implementing the present technology will be described. The description will be given in the following order.
1. Presentation of Plating
2. Learning of Plating Generation Model
3. Configuration and Action of Each Device
4. Example of Control of Cooking Robot
5. Other Examples

### <Presentation of Plating>

Fig. 1 is a diagram illustrating an example of presentation of a Plating by an information processing device according to an embodiment of the present technology.

A situation shown in the upper part of Fig. 1 is a situation in which a chef who is cooking is considering a Plating of a dish. In the example of Fig. 1, an information processing device 1 which is a tablet terminal is placed next to the chef who is cooking. The information processing device 1 has a function of presenting a new Plating in response to the chef's request.

For example, as shown in a balloon #1, it is assumed that the chef desires "a Plating with a bright and gentle image". In this example, a Plating is presented in response to the designation of a Plating subjective evaluation, which is a subjective evaluation of the appearance of a Plating, such as "a bright and gentle image".

Fig. 2 is a diagram illustrating an example of a screen used to designate a Plating subjective evaluation.

A designation screen for a Plating subjective evaluation illustrated in Fig. 2 is displayed on a display of the information processing device 1 when the chef has performed a predetermined operation. As illustrated in Fig. 2, a radar chart 11 is displayed at substantially the center of the designation screen. The radar chart 11 is a radar chart which is used to designate a Plating subjective evaluation.

The radar chart 11 is a radar chart having nine types of elements, that is, brightness, gentleness, roughness, simplicity, vividness, a feeling of size, a feeling of temperature, weather, and a seasonal feeling as axes. In this example, a Plating subjective evaluation is expressed by nine types of elements such as brightness, gentleness, roughness, and the like. For example, a chef designates the values of the elements by directly touching the position of each element on the radar chart 11 with his or her finger.

The Plating subjective evaluation may be designated using a sound instead of being designated using the radar chart as illustrated in Fig. 2. In a case where a Plating subjective evaluation has been designated using a sound, sound recognition, language analysis, and the like are performed in the information processing device 1, and the meaning of what the chef says is specified.

A Plating subjective evaluation may be designated by operating a keyboard or the like to directly input the value of each of the elements instead of being designated by designating a value on the radar chart.

The designation of such a Plating subjective evaluation and the designation of a Plating image picture which is a picture of a Plating which is imaged by the chef are performed.

Fig. 3 is a diagram illustrating an example of a screen used to designate a Plating image picture.

As illustrated in Fig. 3, a plurality of sample pictures that are samples of Platings are displayed on a designation screen for a Plating image picture. In the example of Fig. 3, three sample pictures, that is, sample pictures P1 to P3, are displayed. More sample pictures are displayed on a designation screen through a scroll operation or the like.

A chef designates a Plating image picture indicating a Plating which is close to what he or she is imagining by selecting a sample picture of his or her preference.

Fig. 4 is a diagram illustrating an example of a sample picture.

As shown in a balloon of Fig. 4, attribute information is set for each of the sample pictures. The attribute information includes a keyboard indicating features of a Plating and subjective evaluation information of a Plating. The subjective evaluation included in the attribute information is a subjective evaluation when the chef himself or herself or many third parties see a Plating of a sample picture.

In a case where the presentation of a Plating has been received in this manner, the chef selects a Plating subjective evaluation and a Plating image picture.

Referring back to the description of Fig. 1, in a case where the chef's desired Plating is designated as described above, a Plating corresponding to the chef's desire is generated in the information processing device 1 and is presented to the chef as shown in balloons #2 and #3.

In the example of Fig. 1, a Plating is presented by displaying a picture indicating a Plating. In addition, the way a Plating is realized, such as "putting a strawberry sauce in a sauce dispenser..." is presented to the chef. In this manner, a Plating is presented to the chef using a sound or screen display.

Fig. 5 is a diagram illustrating an example of input and output for the information processing device 1.

As illustrated in Fig. 5, a Plating generation model is prepared in the information processing device 1. The Plating generation model is a prediction model for outputting a new Plating using a Plating subjective evaluation and a Plating image picture as inputs. The Plating generation model is generated by machine learning such as deep learning and is prepared in the information processing device 1.

The chef can receive the presentation of the Plating generated using such a Plating generation model to perform a Plating as presented or can get a suggestion therefrom to consider a new Plating. The information processing device 1 can be referred to as a Plating generator that presents a new Plating itself or presents information which is a suggestion for a new Plating to the chef.

Note that the Plating generation model as illustrated in Fig. 5 may be prepared in a server on the Internet instead of being prepared in the information processing device 1. In this case, a new Plating is generated in the server on the Internet, and information of the generated Plating is presented to the chef by the information processing device 1.

### <Learning of Plating Generation Model>

### • Collecting of Learning Data

Fig. 6 is a diagram illustrating the state of collecting of learning data.

As illustrated in Fig. 6, various instruments for measuring an action of a chef are provided around a kitchen where the chef cooks. In the example of Fig. 6, cameras 41-1 and 41-2 are installed to direct an angle of view to the chef who is cooking. An action of the chef is analyzed on the basis of pictures captured by the cameras 41-1 and 41-2. The pictures captured by the cameras 41-1 and 41-2 may be moving images or may be still images.

Various sensors such as an acceleration sensor, a position sensor, a temperature sensor, and a distance sensor are attached to the chefs body. An action of the chef is analyzed on the basis of sensor data measured by the sensors.

An action of the chef is analyzed by a learning server 51 connected to a device on the chef side through the Internet. The learning server 51 receives information transmitted from the sensors including the cameras 41-1 and 41-2 and analyzes an action of the chef.

Note that chefs whose actions are to be analyzed are not only chefs who receive the presentation of a Plating, but also many other chefs. Learning of a Plating generation model is performed on the basis of actions of various chefs.

The measurement of such an action of the chef is continued until, for example, a dish is completed. A plurality of cooking steps are required to complete one dish, and an action of each of the steps is analyzed.

Fig. 7 is a diagram illustrating an example of a flow of generation of cooking action information and Plating action information.

In the example of Fig. 7, actions of cooking steps #1 to #N are performed, and food ingredients made through the actions are arranged in a Plating step, thereby completing a certain dish.

In this case, actions performed in the cooking steps #1 to #N are measured (sensed), and cooking action information #1 to #N which is information on the actions of the respective cooking steps is generated on the basis of measurement results.

In addition, an action performed in the Plating step is measured, and Plating action information which is information on the action of the Plating step is generated on the basis of measurement results.

Here, cooking action information includes, for example, food ingredient information and action information. The food ingredient information is information on food ingredients used by a chef during a cooking step. The information on food ingredients includes information indicating the type of a food ingredient, the amount of a food ingredient, the size of a food ingredient, and the like.

For example, in a case where a chef has cooked with carrots in a certain cooking step, information indicating that carrots have been used is included in food ingredient information. Information indicating various foodstuffs used by the chef as materials of a dish such as water and seasonings, and the like are included in the food ingredient information. The foodstuffs are various things that people can eat.

The food ingredients used by the chef are recognized, for example, by analyzing pictures obtained by capturing the chef who is cooking with the cameras 41-1 and 41-2. The food ingredient information is generated on the basis of food ingredient recognition results.

The action information is information on the movement of the chef in the cooking step. The information on the movement of the chef includes information such as the types of cooking tools used by the chef, the movement of the body of the chef at each time including the movement of the chef's hands, and the chef's standing position at each time.

For example, in a case where the chef has cut a certain food ingredient with a kitchen knife, information indicating that the kitchen knife has been used as a cooking tool and information indicating a cutting position, the number of cuts, the degree of a cutting force, an angle, a speed, and the like are included in the action information.

In addition, in a case where the chef stirs a liquid contained in a pot as a food ingredient with a ladle, information indicating that the chef has used the ladle as a cooking tool and information indicating the adjustment of a stirring force, an angle, a speed, a time, and the like are included in the action information.

### • Plating Action information

Fig. 8 is a diagram illustrating an example of information constituting Plating action information.

As illustrated in Fig. 8, Plating action information includes information indicating food ingredients used for a Plating, information on the movement of a chef in a Plating step, information on tools used for a Plating, information on a layout of food ingredients, and information on tableware used for a Plating.

Plating action information is constituted by this information at respective times in a Plating step. The Plating action information is time-series data indicating each of food ingredients, movement, tools, a layout, and tableware.

A specific example of Plating action information will be described with reference to Fig. 9 to Fig. 14.

Fig. 9 is a diagram illustrating an action example of a time when a Plating step is started.

It is assumed that an action as illustrated on a left side in Fig. 9 has been performed at time t0 which is a time when a Plating step is started. In this example, an action of holding a sauce dispenser T1 filled with a strawberry sauce with a right hand, pressing a tip end of the sauce dispenser against a predetermined position on a plate, and pushing out a small amount of sauce in that state is performed. The state of this action is captured by the cameras 41-1 and 41-2 or the like.

In this case, as indicated by a tip end of a white arrow, it is specified that a strawberry sauce has been used as the food ingredients used for a Plating.

In addition, as actions of a chef, actions such as gripping the sauce dispenser T1 with the right hand and moving the right hand holding the sauce dispenser T1 to a reference position of the plate are specified.

It is specified that the sauce dispenser T1 has been used as the tools used for a Plating.

As a layout of a Plating, coordinates indicating a planar position of tableware and a layer indicating a three-dimensional position are specified.

It is specified that tableware with a predetermined ID, which is a circular flat plate, has been used as the tableware used for a Plating.

Fig. 10 is a diagram illustrating an example of an action performed at time t1.

It is assumed that an action as shown on a left side in Fig. 10 has been performed at time t1 after a predetermined period of time has elapsed from time t0. In this example, an action of arranging strawberry sauces, which are pushed out in dot shapes, in a ring shape so as to surround the center of the plate is performed.

At time t1 at which a fourth dot is arranged, an action such as shifting the position of the right hand is specified as an action of the chef without changes in food ingredients, tools, and tableware as indicated by a tip end of a white arrow. In addition, the position of the fourth dot is specified as a layout of a Plating.

Fig. 11 is a diagram illustrating an example of an action at time t2.

It is assumed that an action as shown on a left side in Fig. 11 has been performed at time t2 after a predetermined period of time has elapsed from time t1. In this example, an action of arranging strawberry sauce in dot shapes is finished, and subsequently, an action of switching a tool to a brush T2 and pressing the brush against a certain dot is performed.

In this case, as indicated by a tip end of a white arrow, an action such as gripping the brush or moving a right hand gripping the brush to the position of a certain dot located at a reference position of the plate is specified as an action of the chef without changes in food ingredients or tableware. In addition, it is specified that the brush T2 has been used as the tools used for a Plating. The position of a first dot is specified as a layout of a Plating.

Fig. 12 is a diagram illustrating an example of an action at time t3.

It is assumed that an action as shown on a left side in Fig. 12 has been performed at time t3 after a predetermined period of time has elapsed from time t2. In this example, an action of spreading the strawberry sauce in each of the dot shapes toward the center of the plate with the brush T2 is performed.

At time t3 at which the first dot of the strawberry sauce is spread, an action such as sliding the position of the right hand toward the center of the plate is specified as an action of the chef without changes in food ingredients, tools, or tableware as indicated by a tip end of a white arrow. In addition, a position after the sliding is specified as a layout of a Plating.

Fig. 13 is a diagram illustrating an example of an action at time t4.

It is assumed that an action as shown on a left side in Fig. 13 has been performed at time t4 after a predetermined period of time has elapsed from time t3. In this example, it is assumed that an action of spreading strawberry sauce has been performed, and subsequently, an action of switching a tool to a turner T3 and placing a grilled steak at the center of the plate has been performed.

In this case, as indicated by a tip end of a white arrow, it is specified that steak has been used as the food ingredients used for a Plating. In addition, an action such as moving the right had gripping the turner T3 having steak placed thereon to the center of the plate or lowering the turner T3 is specified as an action of the chef.

In addition, it is specified that the turner T3 has been used as the tools used for a Plating. The center position of the plate is specified as a layout of a Plating. The position where steak has been placed is specified as a layer 2 because it is the position of a layer above a layer 1 where the strawberry sauce is placed.

Fig. 14 is a diagram illustrating an example of an action at time t5.

It is assumed that an action as shown on a left side in Fig. 14 has been performed at time t5 after a predetermined period of time has elapsed from time t4. In this example, an action of adding herbs next to the steak is performed, and thus the Plating step is terminated.

In this case, as indicated by a tip end of a white arrow, it is specified that herbs have been used as the food ingredients used for a Plating. In addition, an action of adding herbs next to the steak is specified as an action of the chef.

In addition, it is specified that a tool has not been used as the tools used for a Plating. A location in the vicinity of the steak placed at the center of the plate is specified as a layout of a Plating.

Plating action information constituted by time-series data representing each of the above-described food ingredients, movement, tools, a layout, and tableware related to a Plating is generated in the learning server 51 on the basis of pictures captured during the Plating step, and the like.

In addition, the Plating action information and cooking action information generated on the basis of a cooking step before the Plating step are associated with each other, and cooking data of each dish is generated.

Fig. 15 is a diagram illustrating an example of a dish DB.

As illustrated in Fig. 15, information in which cooking action information and Plating action information are associated with each other is stored as cooking data of each dish in a dish DB managed by the learning server 51. The Plating action information included in the cooking data of each dish is used for the learning of a Plating generation model.

The information is generated on the basis of the Plating generation model generated by learning using such Plating action information, and thus a new Plating is generated on the basis of the Plating action information including information such as food ingredients, actions, tools, a layout, tableware, and the like.

### • With Respect to Learning

Fig. 16 is a diagram illustrating an example of information used for the learning of a Plating generation model.

As illustrated in Fig. 16, Plating action information S(t), subjective evaluation information E(T), and Plating result information V(T) are used for the learning of the Plating generation model.

The Plating action information S(t) is time-series data of the above-described Plating action information.

The subjective evaluation information E(T) is information representing a Plating subjective evaluation of a person who has viewed a dish made by completing a Plating step. The time T represents the time when the Plating step has been completed.

The Plating result information V(T) is a picture of a dish made by completing the Plating step.

In the learning server 51, Plating action information S(t), subjective evaluation information E(T), and Plating result information V(T) of each dish are managed in association with each other. As described above, the Plating generation model is a prediction model that outputs a new Plating using a Plating subjective evaluation and a Plating image picture as inputs.

The new Plating is a result of the Plating action information S(t), and thus only a relationship between the subjective evaluation information E(T), the Plating result information V(T), and the Plating action information S(t) needs to be learned.

Fig. 17 is a diagram illustrating an example of learning.

As illustrated in Fig. 17, Plating action information S(t), subjective evaluation information E(T), and Plating result information V(T) are input to a learning device 61 that performs the learning of a Plating generation model. The learning device 61 is provided in the learning server 51.

A Plating represented by the Plating result information V(T) is obtained through a Plating action represented by the Plating action information S(t), and thus the learning device 61 performs the learning of parameters constituting a neural network that outputs the Plating action information S(t) when the Plating result information V(T) has been input.

In addition, the subjective evaluation information E(T) is a subjective evaluation for a Plating represented by the Plating result information V(T), and thus the learning of a relationship between the subjective evaluation information E(T) and the Plating result information V(T) is performed.

When subjective evaluation information E(T) and Plating result information V(T) of a certain dish have been input, a neural network that outputs Plating action information S(t) of the dish is learned as a Plating generation model as illustrated in Fig. 18.

Here, in a case where the subjective evaluation information E(T) is changed, and the changed subjective evaluation information E(T) and the Plating result information V(T) are input, the Plating action information S(t) of which at least a portion has been changed is output from the Plating generation model.

A Plating realized by the Plating action information S(t) of which at least a portion has been changed is a Plating different from the Plating represented by the Plating result information V(T), that is, a new Plating.

A Plating subjective evaluation designated by the chef using the screen described with reference to Fig. 2 corresponds to the changed subjective evaluation information E(T) mentioned here. In addition, a Plating image picture designated by the chef using the screen illustrated in Fig. 3 corresponds to the Plating result information V(T).

In a case where a Plating subjective evaluation and a Plating image picture designated by the chef are input, Plating action information S(t) for realizing a Plating different from the Plating represented by the Plating image picture is output from a Plating generation model.

For example, Recurrent Neural Network with Parametric Bias (RNNPB) is used as the Plating generation model. RNNPB is a neural network that makes it possible to learn and predict nonlinear time-series data by having recursive coupling. Further, a desired pattern can be output by inputting a PB value corresponding to a certain pattern.

Fig. 19 is a diagram illustrating an example of prediction using RNNPB.

As illustrated in Fig. 19, RNNPB constituting a Plating generation model is constituted by a lower layer that outputs Plating action information at time t+1 when Plating action information at time t has been input, and a higher layer that outputs a value used as a PB value (PBt) of the lower layer when a subjective evaluation and a PB value (PB(t')) corresponding to a Plating result information V(T) have been input.

In the example illustrated in Fig. 19, brightness 5, softness 3, roughness 1, simplicity 2, ... are input to RNNPB as the Plating subjective evaluation designated by the chef. Further, a PB value corresponding to a certain Plating image picture is input to RNNPB.

Here, a Plating subjective evaluation, such as brightness 5, softness 3, roughness 1, simplicity 2, ..., which is designated by the chef is different from a subjective evaluation (Fig. 4) which is set in a sample picture selected as a Plating image picture. Thereby, the Plating action information S(t) which is output from RNNPB is Plating action information S(t) for realizing a Plating which is different from the Plating represented by the Plating image picture.

Note that a neural network constituting a Plating generation model is not limited to RNNPB. A Plating generation model can be constituted by various neural networks generated by learning a relationship between subjective evaluation information E(T), Plating result information V(T), and Plating action information S(t).

Fig. 20 is a diagram illustrating an example of Plating action information S(t) which is output by a Plating generation model.

As illustrated in Fig. 20, Plating action information S(t) corresponds to the Plating action information in Fig. 8 which is learning data, and is time-series data of information on which food ingredients are arranged, information on which movement is performed for an arrangement, information on which tool is used for an arrangement, information on an arrangement location, and information on which tableware is used for an arrangement.

The presentation of these pieces of information output by the Plating generation model is the presentation of a new Plating.

### <Configuration and Action of Each Device>

### • Configuration of Information Processing Device 1

Fig. 21 is a block diagram illustrating a configuration example of hardware of the information processing device 1.

As illustrated in Fig. 21, the information processing device 1 is constituted by a computer such as a tablet terminal. A central processing unit (CPU) 101, a read only memory (ROM) 102, and a random access memory (RAM) 103 are connected to each other via a bus 104.

An input/output interface 105 is additionally connected to the bus 104. An input unit 106 including a keyboard, a mouse, and the like, and an output unit 107 including a display, a speaker, and the like are connected to the input/output interface 105.

In addition, a storage unit 108 that is constituted by a hard disk, a nonvolatile memory, or the like, a communication unit 109 that is constituted by a network interface or the like, and a drive 110 that drives a removable medium 111 are connected to the input/output interface 105.

For example, the CPU 101 loads programs stored in the storage unit 108 to the RAM 103 via the input/output interface 105 and the bus 104, so that various steps of processing such as the generation of a new Plating are performed.

Fig. 22 is a block diagram illustrating a functional configuration example of the information processing device 1.

At least some of the functional units illustrated in Fig. 22 are realized by causing the CPU 101 in Fig. 21 to execute a predetermined program.

As illustrated in Fig. 22, an information processing unit 151 is realized in the information processing device 1. The information processing unit 151 includes an acquisition unit 161, a Plating generation unit 162, and a presentation unit 163.

The acquisition unit 161 acquires a Plating subjective evaluation and a Plating image picture designated by a chef. Information acquired by the acquisition unit 161 is supplied to the Plating generation unit 162.

The Plating generation unit 162 has a Plating generation model. The Plating generation unit 162 inputs the Plating subjective evaluation and the Plating image picture which are supplied from the acquisition unit 161 to the Plating generation model and outputs Plating action information S(t).

The Plating generation unit 162 outputs information representing the contents of the Plating action information S(t) to the presentation unit 163 as information of a new Plating. A picture representing an image of a Plating realized on the basis of the Plating action information S(t) output from the Plating generation model may be generated in the Plating generation unit 162 and may be supplied to the presentation unit 163.

The presentation unit 163 presents information of a new Plating supplied from the Plating generation unit 162. The presentation of a Plating may be performed using a sound output from a speaker or may be performed by the display of a screen on a display. The presentation unit 163 presents, for example, description of each action for realizing a new Plating to a chef in order.

### • Actions of Information Processing Device 1

Processing of the information processing device 1 that generates a new Plating will be described with reference to a flowchart of Fig. 23.

In step S1, the acquisition unit 161 acquires a subjective evaluation of a Plating that is imaged by a chef.

In step S2, the acquisition unit 161 acquires a Plating image picture representing an image of a Plating in the chef's mind.

In step S3, the Plating generation unit 162 inputs a Plating subjective evaluation and a Plating image picture designated by the chef to a Plating generation model and outputs Plating action information S(t).

In step S4, the presentation unit 163 presents information of a new Plating supplied from the Plating generation unit 162 to the chef.

Through the above-described processing, the information processing device 1 can generate a new Plating and present the generated new Plating to the chef. A Plating is presented by the information processing device 1 by being generated in accordance with conditions designated by a chef every time instead of being presented by the information processing device 1 by selecting Plating matching conditions from among a plurality of Platings prepared in advance.

The chef can receive the presentation of a Plating matching his or her image and perform a Plating as presented or can obtain a suggestion therefrom and create a new Plating.

In the above, a Plating subjective evaluation and a Plating image picture have been designated by a chef, but a keyword related to a Plating may be able to be designated instead of a Plating image picture.

In a case where a keyword is designated, a sample picture including the keyword in attribute information is selected and used as a Plating image picture. As described with reference to Fig. 4, a keyword is set for attribute information of each sample picture.

Further, in a case where similarity between sample pictures is set, a sample picture similar to a sample picture selected by a chef may be used as a Plating image picture.

Thereby, there is a possibility that a Plating not intended by the chef will be generated and presented.

In addition, the chef may be able to correct a sample picture. The correction of a sample picture is performed, for example, by performing an operation of clicking a portion desired to be corrected to change a shape or color on a screen. In a case where the correction of a sample picture has been performed, the corrected sample picture is used as a Plating image picture, and a Plating is generated.

Thereby, even when there is no sample picture in which an image of the chef himself or herself is shown, the chef can designate a Plating image picture that matches his or her own image to generate a Plating.

Instead of viewing a sample picture displayed on a screen and designating a sample picture to be set as a Plating image picture, the designation of a Plating image picture may be performed by drawing an illustration by hand, or the like. In a case where an illustration has been drawn by hand, a sample picture close to the illustration is searched for, and the sample picture is used as a Plating image picture.

A change corresponding to the chef's utterance may be made to a Plating that has been presented once. In a case where utterance such as "brighter" or "more spring-like" is made, a Plating subjective evaluation is changed in accordance with contents of the chef's utterance, and a Plating is generated using the changed Plating subjective evaluation.

In addition, a change in a food ingredient can be designated for a Plating that has been presented once. For example, when an instruction for a change to a Plating using a strawberry sauce has been given in a case where a Plating using a vanilla sauce has been presented, a sample picture of the Plating using a strawberry sauce is searched for, the sample picture being similar to a sample picture designated in advance, and the sample picture is used as a Plating image picture.

In this manner, various methods can be used as a method of designating a Plating subjective evaluation and a Plating image picture.

### • Configuration of Network System

Fig. 24 is a diagram illustrating a configuration example of a network system.

Fig. 24 illustrates a configuration in a case where a new Plating is generated in a Plating generation server 171 on the Internet. The Plating generation server 171 is provided with a configuration which is the same as the configuration of the information processing unit 151 illustrated in Fig. 22.

The Plating generation server 171 and the information processing device 1 provided on a side of a chef perform communication through the Internet. Information indicating a Plating subjective evaluation and a Plating image picture which are designated by the chef is transmitted from the information processing device 1 to the Plating generation server 171.

The acquisition unit 161 of the Plating generation server 171 receives the Plating subjective evaluation and the Plating image picture which are transmitted from the information processing device 1.

The Plating generation unit 162 generates a Plating as described above on the basis of the Plating subjective evaluation and the Plating image picture which are transmitted from the information processing device 1.

The presentation unit 163 transmits information on the Plating generated by the Plating generation unit 162 to the information processing device 1 and presents the information to the chef.

In this manner, a new Plating can be generated in the Plating generation server 171 on the Internet.

### <Example of Control of Cooking Robot>

### • Configuration of Control System

Although the generation of a Plating for a human chef has been described above, a Plating may be generated for a cooking robot. In this case, a Plating action corresponding to a newly generated Plating is performed by the cooking robot.

Fig. 25 is a diagram illustrating a configuration example of the control system.

As illustrated in Fig. 25, the control system includes a data processing device 301 and a cooking robot 302. The cooking robot 302 is a robot that includes a device of a driving system, such as a cooking arm, and various sensors and is equipped with a function of performing cooking. For example, the cooking robot 302 is installed in a home.

The data processing device 301 is a device that controls the cooking robot 302. The data processing device 301 is constituted by a computer or the like.

As illustrated at the left end of Fig. 25, the control of the cooking robot 302 by the data processing device 301 is performed on the basis of recipe data prepared for each dish. In the recipe data, information on each of cooking steps and a Plating step is described. For example, recipe data to be supplied to the data processing device 301 is generated in the Plating generation unit 162 (Fig. 22) by associating information on a cooking step which is input from the outside and information on a Plating step generated by itself with each other. The Plating generation unit 162 also functions as a recipe data generation unit that generates recipe data used for the control of the cooking robot 302.

The data processing device 301 controls the cooking robot 302 on the basis of recipe data to prepare a dish. Data of a recipe including information on a Plating generated by the information processing unit 151 in Fig. 22 is supplied to the data processing device 301 and is used for the control of the cooking robot 302.

For example, in a case where recipe data is input as indicated by an arrow A1, the data processing device 301, as indicated by an arrow A2, outputs an order command on the basis of the description of the recipe data to control a cooking action of the cooking robot 302.

The cooking robot 302 drives each portion such as a cooking arm in response to the order command supplied from the data processing device 301 and performs an action of each cooking step. In addition, the cooking robot 302 drives each portion such as a cooking arm in response to the order command supplied from the data processing device 301 and performs an action of a Plating step. The order command includes information for controlling a torque of a motor provided in the cooking arm, a driving direction, and a driving amount, and the like.

Until a dish is completed, the data processing device 301 sequentially outputs order commands to the cooking robot 302. When the cooking robot 302 takes actions in response to the order commands, a dish is finally completed.

Fig. 26 is a diagram illustrating an example of the contents of described recipe data.

As illustrated in Fig. 26, one recipe data is constituted by a plurality of cooking step data sets. In the example of Fig. 26, a cooking step data set related to a cooking step #1, a cooking step data set related to a cooking step #2, ..., and a cooking step data set related to a cooking step #N are included.

Each of the cooking step data sets includes cooking action information which is information on cooking actions for realizing a cooking step. For example, one cooking step data set is constituted by time-series data of cooking action information for realizing one cooking step.

The cooking action information includes food ingredient information and action information.

The food ingredient information is information on food ingredients used in a cooking step. The information on food ingredients includes information indicating the types of food ingredients, amounts of food ingredients, sizes of food ingredients, and the like.

Note that, food ingredients include not only food ingredients that have not been cooked, but also cooked (prepared) food ingredients obtained by performing some cooking. Food ingredient information included in cooking action information of a certain cooking step includes information of food ingredients that have undergone a cooking step prior to the certain cooking step.

The action information is information on the movement of the cooking arm or the like in the cooking step. The information on the movement includes information indicating the type of cooking tool used for cooking, and the like.

For example, action information of a cooking step of cutting a certain food ingredient includes information indicating that a kitchen knife is used as a cooking tool, and information indicating a cutting position, a cutting frequency, the degree of force in cutting, an angle, a speed, and the like.

In addition, action information of a cooking step of stirring a pot containing a liquid as a food ingredient includes information indicating that a ladle is used as a cooking tool, and information indicating the degree of force in stirring, an angle, a speed, a time, and the like.

Action information of a cooking step of baking a certain food ingredient using an oven includes information indicating that the oven is used as a cooking tool, and information indicating heating power of the oven, a baking time, and the like.

In addition, as illustrated in Fig. 26, one recipe data includes a Plating step data set. The Plating step data set includes Plating action information for realizing a Plating step. For example, a Plating step data set is constituted by time-series data of Plating action information for realizing a Plating step.

Fig. 27 is a diagram illustrating an example of a flow of the reproduction of a dish based on recipe data.

As illustrated in Fig. 27, the reproduction of a dish by the cooking robot 302 is performed by repeating cooking for each cooking step, the cooking being performed on the basis of cooking action information at each time included in a cooking step data set described in recipe data. Food ingredients used for a Plating are prepared through a plurality of cooking steps, that is, cooking steps #1 to #N.

After the cooking step #N is terminated, a Plating action is performed on the basis of Plating action information at each time included in a Plating step data set, thereby completing a dish.

In the example of Fig. 27, it is assumed that a Plating step is performed after all of the cooking steps are finished, but the Plating step may be appropriately performed at a timing before other cooking steps.

Fig. 28 is a diagram illustrating an example of a layout of the data processing device 301.

As illustrated in A of Fig. 28, for example, the data processing device 301 is provided as a device outside the cooking robot 302. In the example of A of Fig. 28, the data processing device 301 and the cooking robot 302 are connected to each other through a network such as the Internet.

An order command transmitted from the data processing device 301 is received by the cooking robot 302 through a network. Images captured by a camera of the cooking robot 302, and various pieces of data such as sensor data measured by the sensors provided in the cooking robot 302 are transmitted from the cooking robot 302 to the data processing device 301 through a network.

As illustrated in B of Fig. 28, the data processing device 301 may be provided inside the housing of the cooking robot 302. In this case, an action of each portion of the cooking robot 302 is controlled in accordance with an order command generated by the data processing device 301.

Hereinafter, description will be mainly given on the assumption that the data processing device 301 is provided as a device outside the cooking robot 302.

### • Appearance of Cooking Robot

Fig. 29 is a perspective view illustrating the appearance of the cooking robot 302.

As illustrated in Fig. 29, the cooking robot 302 is a kitchen-type robot having a horizontal rectangular frame-shaped housing 311. Various configurations are provided inside the housing 311 which is the body of the cooking robot 302.

A cooking assist system 312 is provided on the back side of the housing 311. Spaces formed in the cooking assist system 312 by performing division by a thin plate-shaped member have functions of assisting cooking using cooking arms 321-1 to 321-4 such as a refrigerator, a microwave oven, and a storage.

A top plate 311A is provided with a rail in the longitudinal direction, and the cooking arms 321-1 to 321-4 are provided on the rail. The cooking arms 321-1 to 321-4 can be repositioned along the rail as a moving mechanism.

The cooking arms 321-1 to 321-4 are robot arms configured by connecting a cylindrical member using joint portions. Various operations related to cooking are performed by the cooking arms 321-1 to 321-4.

A space above the top plate 311A is a cooking space where the cooking arms 321-1 to 321-4 perform cooking.

Although four cooking arms are illustrated in Fig. 29, the number of cooking arms is not limited to four. Hereinafter, the cooking arms 321-1 to 321-4 will be collectively referred to as a cooking arm 321 as appropriate in a case where it is not necessary to distinguish between the cooking arms 321-1 to 321-4.

Fig. 30 is an enlarged view of the state of the cooking arm 321.

As illustrated in Fig. 30, attachments having various cooking functions are attached to the tip end of the cooking arm 321. As the attachments for the cooking arm 321, various attachments such as an attachment having a manipulator function (hand function) of grasping a food ingredient, tableware, and the like, and an attachment having a knife function of cutting a food ingredient are prepared.

In the example of Fig. 30, a knife attachment 331-1 which is an attachment having a knife function is attached to the cooking arm 321-1. A lump of meat placed on the top plate 311A is cut using the knife attachment 331-1.

A spindle attachment 331-2, which is an attachment used to fix food ingredients and rotate food ingredients, is attached to the cooking arm 321-2.

A peeler attachment 331-3, which is an attachment having a function of a peeler that peels food ingredients off, is attached to the cooking arm 321-3.

Potato skins lifted by the cooking arm 321-2 using the spindle attachment 331-2 are peeled off by the cooking arm 321-3 using the peeler attachment 331-3. In this manner, the plurality of cooking arms 321 can also perform one operation in association with each other.

A manipulator attachment 331-4, which is an attachment having a manipulator function, is attached to the cooking arm 321-4. A frying pan with chicken is carried to the space of the cooking assist system 312 having an oven function by using the manipulator attachment 331-4.

A cooking action and a Plating action using such a cooking arm 321 can be carried out by appropriately replacing the attachments according to the contents of an action. The same attachment can also be attached to the plurality of cooking arms 321 in such a manner that the manipulator attachment 331-4 is attached to each of the four cooking arms 321.

A cooking action and a Plating action using the cooking robot 302 are performed not only using the above-described prepared attachments as tools for cooking arms but also appropriately using the same tool as tools used for cooking by a person. For example, cooking in which the manipulator attachment 331-4 grasps a knife used by a person and cuts food ingredients using the knife is performed.

### • Configuration of Cooking Arm

Fig. 31 is a diagram illustrating the appearance of the cooking arm 321.

As illustrated in Fig. 31, the cooking arm 321 is configured by connecting thin cylindrical members by hinge portions serving as joint portions as a whole. Each of the hinge portions is provided with a motor that generates a force for driving each member, or the like.

As cylindrical members, a detachable member 351, a relay member 353, and a base member 355 are provided in this order from the tip end.

The detachable member 351 and the relay member 353 are connected to each other by a hinge portion 352, and the relay member 353 and the base member 355 are connected to each other by a hinge portion 354.

A detachable portion 351A to or from which attachments are attached or detached is provided at the tip end of the detachable member 351. The detachable member 351 includes the detachable portion 351A to or from which various attachments are attached or detached, and functions as a cooking function arm portion that performs cooking by operating the attachments.

A detachable portion 356 attached to the rail is provided at the rear end of the base member 355. The base member 355 functions as a moving function arm portion that realizes the movement of the cooking arm 321.

Fig. 32 is a diagram illustrating an example of a movable region of each portion of the cooking arm 321.

As indicated by a portion surrounded by an ellipse #1, the detachable member 351 is rotatable about a central axis having a circular cross section. A flat small circle shown at the center of the ellipse #1 indicates the direction of a rotation axis of an alternating dotted-dashed line.

As indicated by a portion surrounded by a circle #2, the detachable member 351 is rotatable about an axis that passes through a fitting portion 351B for the hinge portion 352. In addition, the relay member 353 is rotatable about an axis that passes through a fitting portion 353A for the hinge portion 352.

Each of the two small circles shown inside the circle #2 indicates the direction of a rotation axis (vertical direction of the paper). A movable range of the detachable member 351 centering on the axis that passes through the fitting portion 351B and a movable range of the relay member 353 centering on the axis that passes through the fitting portion 353A are, for example, ranges of 90 degrees.

The relay member 353 is configured to be divided by a member 353-1 on the tip end side and a member 353-2 on the rear end side. As indicated by a portion surrounded by an ellipse #3, the relay member 353 is rotatable about a central axis of a circular cross section in a connection portion 353B between the member 353-1 and the member 353-2. Other movable portions basically have similar movable regions.

In this manner, the detachable member 351 having the detachable portion 351A at the tip end thereof, the relay member 353 connecting the detachable member 351 and the base member 355 to each other, and the base member 355 to which the detachable portion 356 is connected to the rear end thereof are rotatably connected to each other by hinge portions. The movement of each movable portion is controlled by a controller in the cooking robot 302 in response to an order command.

Fig. 33 is a diagram illustrating an example of connection between the cooking arm and the controller.

As illustrated in Fig. 33, the cooking arm 321 and a controller 361 are connected to each other through a wiring in a space 311B formed inside the housing 311. In the example of Fig. 33, the cooking arms 321-1 to 321-4 and the controller 361 are connected to each other through wirings 362-1 to 362-4. The wirings 362-1 to 362-4 having flexibility are appropriately bent according to the positions of the cooking arms 321-1 to 321-4.

### • Configuration of Cooking Robot 302

Fig. 34 is a block diagram illustrating a configuration example of the cooking robot 302.

The cooking robot 302 is configured such that each portion is connected to the controller 361 (Fig. 33) as a control device that controls the action of the cooking robot 302. Among components illustrated in Fig. 34, the same components as those described above are denoted by the same reference numerals and signs. A repeated description will be appropriately omitted.

In addition to the cooking arms 321, a camera 401, a sensor 402, and a communication unit 403 are connected to the controller 361.

The controller 361 is constituted by a computer including a CPU, a ROM, a RAM, a flash memory, and the like. The controller 361 executes a predetermined program by the CPU and controls the overall action of the cooking robot 302. The data processing device 301 may be configured by the controller 361.

For example, the controller 361 controls the communication unit 403 and transmits a picture captured by the camera 401 and sensor data measured by the sensor 402 to the data processing device 301.

In the controller 361, a predetermined program is executed to realize an order command acquisition unit 411 and an arm control unit 412.

The order command acquisition unit 411 acquires an order command which is transmitted from the data processing device 301 and received in the communication unit 403. The order command which is acquired by the order command acquisition unit 411 is supplied to the arm control unit 412.

The arm control unit 412 controls the action of the cooking arms 321 in response to the order command which is acquired by the order command acquisition unit 411.

The camera 401 images the state of the surroundings of the cooking robot 302 and outputs a picture obtained by the imaging to the controller 361. The camera 401 is provided at various locations such as the front surface of the cooking assist system 312 and the tip end of the cooking arms 321.

The sensor 402 is constituted by various sensors such as a temperature and humidity sensor, a pressure sensor, a light sensor, a distance sensor, a human sensor, a positioning sensor, and a vibration sensor. Measurement performed by the sensor 402 is performed at predetermined cycles. Sensor data indicating measurement results obtained by the sensor 402 is supplied to the controller 361.

The camera 401 and the sensor 402 may be provided at positions separated from the housing 311 of the cooking robot 302.

The communication unit 403 is a wireless communication module such as a wireless LAN module or a portable communication module corresponding to Long Term Evolution (LTE). The communication unit 403 performs communication with the data processing device 301 and an external device such as a server on the Internet.

As illustrated in Fig. 34, the cooking arm 321 is provided with a motor 421 and a sensor 422.

The motor 421 is provided in each of the joint portions of the cooking arm 321. The motor 421 rotates around an axis under the control of the arm control unit 412. An encoder that measures the amount of rotation of the motor 421, a driver that adaptively controls the rotation of the motor 421 on the basis of measurement results obtained by the encoder, and the like are also provided at each joint portion.

The sensor 422 is constituted by, for example, a gyro sensor, an acceleration sensor, a touch sensor, or the like. The sensor 422 measures an angular velocity, an acceleration, and the like of each joint portion during the action of the cooking arm 321 and outputs information indicating measurement results to the controller 361. Sensor data indicating measurement results of the sensor 422 is also appropriately transmitted from the cooking robot 302 to the data processing device 301.

### • Configuration of Data Processing Device 301

Fig. 35 is a block diagram illustrating a functional configuration example of the data processing device 301.

At least some of the functional units illustrated in Fig. 35 are realized by executing a predetermined program by the CPU of the computer constituting the data processing device 301.

As illustrated in Fig. 35, a command generation unit 431 is realized in the data processing device 301. The command generation unit 431 includes a recipe data acquisition unit 451, a robot state estimation unit 452, a control unit 453, and a command output unit 454.

The recipe data acquisition unit 451 acquires recipe data newly generated in the information processing device 1 or the like and outputs the recipe data to the control unit 453. The information processing unit 151 (Fig. 22) having a function of generating the entire recipe including a Plating may be provided in the recipe data acquisition unit 451.

The robot state estimation unit 452 receives an image and sensor data which are transmitted from the cooking robot 302. An image captured by the camera of the cooking robot 302 and sensor data measured by a sensor provided at a predetermined location of the cooking robot 302 are transmitted from the cooking robot 302 at predetermined cycles. In an image captured by the camera of the cooking robot 302, the state of the surroundings of the cooking robot 302 is shown.

The robot state estimation unit 452 estimates the state of the surroundings of the cooking robot 302 and the state of a cooking step such as the state of the cooking arm 321 and the state of food ingredients by analyzing an image and sensor data transmitted from the cooking robot 302. Information indicating the state of the surroundings of the cooking robot 302, and the like estimated by the robot state estimation unit 452 is supplied to the control unit 453.

The control unit 453 generates an order command for controlling the cooking robot 302 on the basis of a cooking step data set and a Plating step data set that are described in recipe data supplied from the recipe data acquisition unit 451. For example, an order command for causing the cooking arm 321 to perform an action represented by cooking action information included in the cooking step data set is generated.

An order command is also generated with reference to the state of the surroundings of the cooking robot 302 which is estimated by the robot state estimation unit 452, and the like. The order command generated by the control unit 453 is supplied to the command output unit 454.

The command output unit 454 transmits an order command generated by the control unit 453 to the cooking robot 302.

### • Action of Data Processing Device 301

The processing of the data processing device 301 that controls the action of the cooking robot 302 will be described with reference to a flowchart of Fig. 36.

In step S101, the recipe data acquisition unit 451 acquires recipe data indicating a recipe generated by the information processing device 1 or the like.

In step S102, the control unit 453 selects a predetermined cooking action on the basis of a cooking step data set described in the recipe data and generates an order command for performing the selected cooking action. For example, when a cooking step data set is selected in the order of cooking steps, cooking actions included in the selected cooking step are selected in the order of execution.

In step S103, the command output unit 454 transmits the order command to the cooking robot 302 and causes the cooking robot 302 to execute a cooking action.

In step S104, the robot state estimation unit 452 estimates the state of the cooking robot 302.

In step S105, the control unit 453 determines whether or not all of the cooking actions have been terminated. In a case where it is determined in step S105 that all of the cooking actions have not been terminated, the processing returns to step S102 to select the next cooking action, and the above-described processing is repeated.

In a case where it is determined in step S105 that all of the cooking actions have been terminated, the control unit 453 generates an order command for performing a Plating action on the basis of the Plating step data set described in the recipe data in step S106.

In step S107, the command output unit 454 transmits the order command to the cooking robot 302 and causes the cooking robot 302 to execute a Plating action.

In step S108, the robot state estimation unit 452 estimates the state of the cooking robot 302.

In step S109, the control unit 453 determines whether or not the Plating action has been terminated. In a case where it is determined in step S109 that the Plating action has not been terminated, the processing returns to step S106, and the above-described processing is repeated.

In a case where it is determined in step S109 that the Plating action has been terminated, the processing is terminated. In this case, a dish is completed on the basis of new recipe data generated by the information processing device 1 or the like.

In this manner, recipe data for controlling a robot performing cooking using a cooking arm can be generated by the information processing device 1.

Fig. 37 is a diagram illustrating another configuration example of the control system.

In the control system illustrated in Fig. 37, electronic cooking equipment 303 such as a microwave oven is provided instead of the cooking robot 302. The electronic cooking equipment 303 performs a cooking action and a Plating action in response to an order command supplied from the data processing device 301 and performs cooking. In the electronic cooking equipment 303 having a heating function, for example, a Plating action such as heating of a food ingredient such as chocolate to melt it in a dish is performed.

In this manner, recipe data can be used to control various apparatuses that automatically perform a cooking action and a Plating action.

### <Other Examples>

Although description has been given on the assumption that both a cooking step and a Plating step are performed by the cooking robot 302, the cooking step may be performed by a chef, and only the Plating step may be performed by the cooking robot 302. In this case, only information on the Plating step may be described in recipe data.

### • Configuration Example of Computer

The above-described series of steps of processing can be executed by hardware or executed by software. In a case where a series of steps of processing is executed by software, a program constituting the software is installed in a computer embedded into dedicated hardware, a general-purpose personal computer, or the like.

The installed program is provided by being recorded in a removable medium 111 illustrated in Fig. 21, which is constituted by an optical disc (a compact disc-read only memory (CD-ROM), a digital versatile disc (DVD), or the like), a semiconductor memory, or the like. In addition, the program may be provided through a wired or wireless transmission medium such as a local area network, the Internet, or digital broadcast. The program can be installed in the ROM 102 or a storage unit 108 in advance.

The program executed by the computer may be a program that performs a plurality of steps of processing in time series in the order described in the present specification or may be a program that performs a plurality of steps of processing in parallel or at a necessary timing such as when a call is made.

Note that, in the present specification, a system is a collection of a plurality of constituent elements (devices, modules (components), or the like), and all of the constituent elements may be located or not located in the same housing. Thus, a plurality of devices accommodated in separate housings and connected via a network, and one device in which a plurality of modules are accommodated in one housing are both systems.

The effects described in the present specification are merely exemplary and not limited, and other effects may be obtained.

The embodiment of the present technology is not limited to the above-described embodiments, and various modifications can be made without departing from the gist of the present technology.

For example, the present technology can be configured as cloud computing in which one function is shared and processed in common by a plurality of devices via a network.

Further, the respective steps described in the above-described flowchart can be executed by one device or by a plurality of devices in a shared manner.

Furthermore, in a case where a plurality of steps of processing are included in one step, the plurality of steps of processing included in one step may be executed by one device or by a plurality of devices in a shared manner.

### [Reference Signs List]

- 1: Information processing device
- 51: Learning server
- 61: Learning device
- 151: Information processing unit
- 161: Acquisition unit
- 162: Plating generation unit
- 163: Presentation unit
- 171: Plating generation server
- 301: Data processing device
- 302: Cooking robot

## Claims

1. An information processing device comprising:
an arrangement generation unit configured to generate new arrangement information which is information on a new arrangement on the basis of arrangement information including food ingredient information which is information on food ingredients used for an arrangement of a dish, arrangement action information which is information on an arrangement action by a cooking person, and cooking tool information which is information on cooking tools used for the arrangement.

2. The information processing device according to claim 1,
wherein the arrangement generation unit generates the new arrangement information including information on an arrangement action at each time on the basis of time-series data of the arrangement information.

3. The information processing device according to claim 1,
wherein the arrangement generation unit generates the new arrangement information on the basis of the arrangement information further including layout information which is information on a layout of arranged food ingredients.

4. The information processing device according to claim 1,
wherein the arrangement generation unit generates the new arrangement information on the basis of the arrangement information further including tableware information which is information on tableware used for the arrangement.

5. The information processing device according to claim 1, further comprising:
a recipe generation unit configured to generate recipe data by associating cooking step information and the new arrangement information with each other, the cooking step information being information on a cooking step when food ingredients used for the new arrangement are prepared.

6. The information processing device according to claim 5, further comprising: an order command generation unit configured to generate an order command for causing a cooking robot to perform the cooking step and the new arrangement step on the basis of the recipe data of a predetermined dish.

7. The information processing device according to claim 1,
wherein at least any one of the food ingredient information, the arrangement action information, and the cooking tool information is information obtained by analyzing an image obtained by imaging a state of arrangement by the cooking person or analyzing sensor data obtained by measuring an arrangement action by the cooking person.

8. The information processing device according to claim 2,
wherein the arrangement generation unit generates the new arrangement information on the basis of a model generated by performing learning on the basis of time-series data of the arrangement information, subjective information indicating a subjective evaluation of a person for an arrangement of the cooking person, and an image indicating an arrangement result made by the cooking person.

9. The information processing device according to claim 8,
wherein the model is a neural network that uses a subjective evaluation of a person for an arrangement and an image indicating a predetermined arrangement result as inputs and uses time-series data on the new arrangement as an output.

10. The information processing device according to claim 9, further comprising:
an acquisition unit configured to acquire the subjective evaluation and the image indicating the predetermined arrangement result which are inputs of the model, on the basis of an input by a user who requires the new arrangement.

11. An information processing method comprising:
causing an information processing device to generate new arrangement information which is information on a new arrangement on the basis of arrangement information including food ingredient information which is information on food ingredients used for an arrangement of a dish, arrangement action information which is information on an arrangement action by a cooking person, and cooking tool information which is information on cooking tools used for the arrangement.

12. A cooking robot comprising:
a control unit configured to perform an action of a new arrangement on the basis of new arrangement information which is information on the new arrangement, which is generated on the basis of arrangement information including food ingredient information which is information on food ingredients used for an arrangement of a dish, arrangement action information which is information on an arrangement action by a cooking person, and cooking tool information which is information on cooking tools used for the arrangement.

13. The cooking robot according to claim 12,
wherein the new arrangement information generated on the basis of time-series data of the arrangement information is information including information on an arrangement action at each time.

14. The cooking robot according to claim 12,
wherein the new arrangement information is information generated on the basis of the arrangement information further including layout information which is information on a layout of arranged food ingredients.

15. The cooking robot according to claim 12,
wherein the new arrangement information is information generated on the basis of the arrangement information further including tableware information which is information on tableware used for the arrangement.

16. The cooking robot according to claim 12,
wherein the control unit controls an action of a cooking step and an action of the new arrangement on the basis of recipe data generated by associating cooking step information and the new arrangement information with each other, the cooking step information being information on a cooking step when food ingredients used for the new arrangement are prepared.

17. The cooking robot according to claim 16, further comprising:
an order command generation unit configured to generate an order command for performing the cooking step and the new arrangement step on the basis of the recipe data.

18. A cooking method comprising:
causing a cooking robot to perform an action of a new arrangement on the basis of new arrangement information which is information on the new arrangement, which is generated on the basis of arrangement information including food ingredient information which is information on food ingredients used for an arrangement of a dish, arrangement action information which is information on an arrangement action by a cooking person, and cooking tool information which is information on cooking tools used for the arrangement.

19. Cooking equipment comprising:
a control unit configured to perform an action of a new arrangement on the basis of new arrangement information which is information on the new arrangement, which is generated on the basis of arrangement information including food ingredient information which is information on food ingredients used for an arrangement of a dish, arrangement action information which is information on an arrangement action by a cooking person, and cooking tool information which is information on cooking tools used for the arrangement.
